# EUROPEAN PATENT SPECIFICATION

(11) **EP 0 577 006 B1**
(45) Date of publication and mention of the grant of the patent: **16.12.1998**
(21) Application number: 93110081.2
(22) Date of filing: 24.06.1993
(51) Int. Cl.: G06F 13/42

(54) **Four-lines serial bus**
Serieller vieradriger Bus
Bus série à quatre lignes

(30) Priority: 29.06.1992 EP 92401847; 07.12.1992 EP 92403310
(43) Date of publication of application: 05.01.1994
(73) Proprietor: THOMSON multimedia, 92648 Boulogne Cédex (FR)
(72) Inventor: Saini, Jasjit, F-67560 Rosheim (FR); Randrianalimanana, Pax, F-67400 Illkirch (FR); Gauche, Laurent, F-67400 Illkirch-Graf (FR); Vine, Francis, Winchmore Hill, London N21 1QX (GB)
(74) Representative: Hartnack, Wolfgang, Dipl.-Ing.

(56) References cited:
- EP-A- 0 163 883
- EP-A- 0 195 475
- EP-A- 0 225 664

## Description

The present invention relates to a method for the exchange of data between a master unit and one or more slave units via a serial data bus.

### Background

The EUROCRYPT control access subsystem can be applied to TV systems in the MAC/packet family and is used for scrambling/ encryption: 'Access Control System for the MAC/Packet Family: EUROCRYPT', July 1991, and 'Specifications: Serial bus for a control access subsystem'.

From EP-A-0 163 883 it is known a secondary storage facility employing serial communications between drive and controller. A dedicated cable of four conductors is used to connect each controller/drive pair. Each conductor carries one unidirectional channel. One is used for command messages and data sent from controller to drive, one carries response messages and data from drive to controller and the two other conductors carry real-time control signals from controller to drive and vice versa. Each of the real-time state signals comprise a repeating bit pattern of predetermined pattern length; each bit pattern having a predetermined meaning.

From EP-A-0 195 475 an interface arrangement between a TV receiver and a conditional access sub-system is known. Both components are connected via bus system having a first line conveying clock signals at the TV line frequency, a second line conveying data during prescribed periods in a four television frame period bus cycle and a third line conveying a signal indicating the direction of data travel on the second line.

### Invention

It is one object of the invention to disclose a low cost method of connecting a control access subsystem to a descrambler and to allow connecting of multiple control access subsystems to a single descrambler. This object is achieved by the method disclosed in claim 1.

The following description part is divided into two parts:
A) Low level description which describes the way to manage the serial link: command/data transfer, error detection.
B) High level description which describes the command bytes.

### Vocabulary conventions:

The main processor is called the DECODER.
The Control Access Subsystem is called the CASS.
The drawings and texts will describe electrical levels on the interface lines to avoid any confusion.

### A) PHYSICAL AND DATA LINKS.

This part describes the low level interface between the CASS and the DECODER. The principal characteristic of this interface is that the DECODER is always the master. Several CASSs (slaves) can be connected to one decoder.

A complete command is processed in two phases:
- a command order + data is sent from the DECODER to a CASS;
- the considered CASS sends the response to the DECODER when it has finished any processing.
For the response from the CASS, the DECODER must be able to recover data at any time.

### Physical link

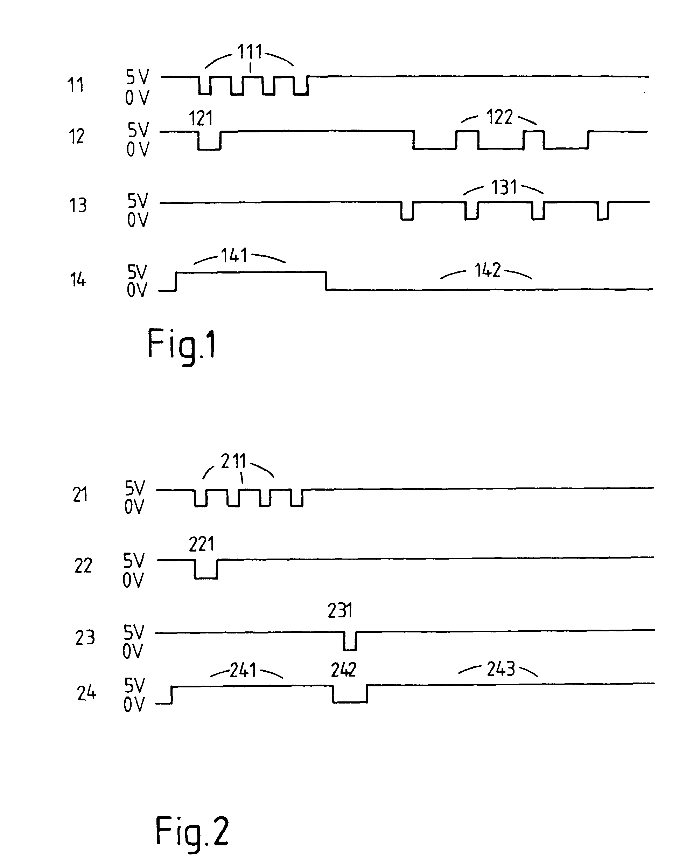

The following lines used (see Fig. 1 and Fig. 2):
- DATACMD 11, 21;
- DATARESP 13, 23;
- CONTROL (CTRL) 12, 22;
- READY 14, 24;
- GND (not depicted).

All the lines use TTL levels. All the lines are unidirectional.
- DATACMD: output from the decoder, idle state = 5V;
- DATARESP: output from the CASS, idle state = 5V, open collector;
- CONTROL: output from the decoder;
- READY: output from the CASS, open collector.

### Logical description:

- DATACMD: transmission of command/data from the decoder to the CASS;
- DATARESP: transmission of response/data from the CASS to the decoder;
- CONTROL: identifies command bytes/data bytes. Optional handshake during the transmission of the response from the CASS;
- READY: indicates the state busy/ready of the CASS.

### Serial link:

Asynchronous serial link at 19200 bauds. Convention for byte coding:
- logical '0' <---> 0V, logical '1' <---> 5V;
- 1 start bit (0V) + 8 bits + 1 stop bit (5V), (no parity bit);
- The LSB is transmitted first;
- Between each byte, the value of the additional guard time has no matter.

### Data link

Management of the lines by the DECODER:
When the READY line 14, 24 is at 5V (CASS ready), the DECODER can start to transmit commands 111, 211 and/or data following this sequence:
- When sending the first byte to the CASS, the decoder identifies the command header byte 121, 221 from the data bytes by setting the CONTROL line 12, 22 to 0V;
- The decoder sets the line CONTROL to 5V and sends the rest of the command 111, 211 (i.e. data associated with the command);
- The decoder is waiting for the response 131 from the CASS.
The CONTROL line 12, 22 must remain to 0V during all the duration of the stop bit of the command header byte 121, 221.

### Management of the lines by the CASS:

- When any CASS is ready to receive a new command from the DECODER, it sets the READY line 14, 24 to 5V;
- Reception of the complete command from the decoder by the CASS;
- The considered CASS sets the READY line to 0V (CASS busy 142, 242) and processes the command;
- The CASS sends the response 131 to the decoder.

### Response from the CASS:

When the CASS receives a command from the decoder, it does not send an acknowledge but directly the CASS response 131 when any internal processing is finished. The response is sent in an asynchronous way.

### Two cases can appear:

- The CASS does not answer.
   There is a communication problem with the CASS (typically: CASS not connected);
- The CASS sends an answer (at least 1 byte).
   a) normal response: see paragraph *data format*.
   b) error indication: see paragraph *error processing*.
The CASS can send the first byte of the response as soon as it has set the READY line to 0V after the reception of a complete command from the decoder.

### Handshake between each transmitted byte:

Handshake from the decoder.
When the DECODER wants to slow down the bytes flow (during a CASS response), it sets the CONTROL line to 0V. The CASS tests the CONTROL line and transmits only, if it is set to 5V.
The handshake between each transmitted byte is optional. The receiver can do the handshake at any time during the reception of the bytes. There is no handshake from the CASS.

### Data format

### Command from the DECODER to the CASS:

- byte 1: command header;
- byte 2: CASS address;
- byte 3: length of the data field (LSB first), L;
- byte 4, (L+3): data;
- byte (L+4), (L+5): check sum of the preceding bytes (2 bytes).
Only the data field is optional.

### Response from the CASS:

- byte 1: command header;
- byte 2: CASS address;
- byte 3: length of the data field (LSB first), L;
- byte 4, (L+3): data;
- byte (L+4), (L+5): check sum of the preceding bytes (2 bytes).
Only the data field is optional.

### Description of the command header byte:

The command header byte is coded as c5 c4 c3 c2 c1 c0 p0 18.
- c5 to c0 is the command/response type described in paragraph *B) MESSAGE LEVEL*;
- p0 is the continuation bit: one/multi packets;
- 18 is the 9th bit of the transmitted length (described below).

The response is sent by packets of 256 bytes to the DECODER. When the response is longer than 256 bytes, it cannot be sent in one shot. Each packet transmitted to the DECODER will indicate (with flag p0) the presence/absence of a continuation packet containing more data.

When the decoder receives a response with the continuation bit set to '1', it must repeat the same command again (same command header byte) to have the next part of the response. If the DECODER sends a different command, the CASS does not send the rest of the response and will process directly the new command. The continuation bit p0 cannot be used for a data transfer from the DECODER to the CASS.

### Definition of the transmitted length:

The data length is coded on 9 bits:
- the 8 LSB are transmitted in the byte L (17 16 15 14 13 12 11 10);
- the last bit (MSB 18) is transmitted in the command header byte.
The length is always transmitted. If the length is '0', there is no data field.
The maximal length is limited to 256 bytes. Therefore, if bit 18 (in the command header byte) is '1', byte L is '0'.

### Definition of the check sum:

The check sum is the first complement of the arithmetic sum of all the transmitted bytes (except the two bytes of the check sum). The sum is coded on two bytes with the least significant byte transmitted first. The check sum is always transmitted.

### Error processing

Time out error detection in the DECODER:
A time out of 2 seconds is defined in 2 cases:
a) between each byte transmitted during the response from the CASS.
b) after a command from the DECODER when it is waiting for a response.
The time out detection is started when the decoder has sent the last byte of its command and re-initialised after each byte received from the CASS during the response.
The time out detection is stopped when the last byte of the CASS response has been received.

### Time out error detection in the CASS:

A time out of 20ms is defined during the reception of a command 111, 211 from the DECODER between each transmitted byte. The time out detection is re-initialised after each received byte till the end of the message. When the CASS detects a time out error it sends the byte 'ee (231) in connection with a busy command 242 on the READY line 24. After that, the CASS is waiting for a new command. The READY line is switched to status 'ready' 243 again.

### Check sum errors:

When the check sum transmitted by the DECODER is different to the check sum calculated by the CASS, the response from the CASS is a command 'ee (231).

An error can also occur because of an incorrect data length (data flow too long or too short for the device which is the receiver). This error can generate either a time out error or a check sum error depending on the case.

### Multi CASS structure

The inventive data bus allows driving of several CASS units by one DECODER. Each CASS has a particular address. At each time a CASS receives a particular command, it compares the address received to its own address. Only the CASS concerned will send a response to the given command. The CASS units which are not concerned by a command, do not control the communication lines 13, 23, 14, 24 (idle state = 5V).
The bus lines are common for all the CASS devices.

### Check sum error detected by the decoder after the reception of a CASS response:

- either one or several bytes have been corrupted during the transmission;
- or more than one CASS have sent a response at the same time.

The responses cause a conflict on the bus.
If this error is repetitive, it can be considered that several CASSs have the same address.

Time out error detected by the decoder after the send of a command:
- either there is no respective CASS connected to the bus;
- or more than one CASS have sent a response at the same time.
If at least one byte has been received by the decoder, several CASSs will have the same address. Otherwise the considered CASS is not connected to the bus.

### B) MESSAGE LEVEL.

This part describes how to include the CASS commands using the protocol defined above. The CASS commands itself are described in paragraph *Preferred embodiments*.

Each CASS command from the DECODER is identified by a parameter called command type.
Each CASS response is identified by a parameter called response type.

### Command from the DECODER to the CASS:

- byte 1: command header contains the command type;
- byte 2: CASS address;
- byte 3: length of the data field (LSB first), L;
- byte 4, (L+3): data;
- byte (L+4), (L+5): check sum of the preceding bytes (2 bytes).

### Response from the CASS:

- byte 1: command header contains the response type;
- byte 2: CASS address;
- byte 3: length of the data field (LSB first), L;
- byte 4, (L+3): data;
- byte (L+4), (L+5): check sum of the preceding bytes (2 bytes).

In principle the inventive data bus is suited for connecting a master unit (DECODER) and one or more slave units (CASS), and comprises:
- a first data connection (11, 21) which transmits commands and/or data from said master unit to said slave unit/s;
- a second data connection (13, 23) which transmits command responses and/or data from said slave unit/s to said master unit;
- a third data connection (12, 22) which identifies commands and/or data outputted by said master unit;
- a fourth data connection (14, 24) which indicates the state 'busy' and/or 'ready' of said slave unit/s, whereby all of said data connections are unidirectional and use a common ground level.

Advantageous additional embodiments of the inventive data bus are resulting from the respective dependent claims.

### Drawings

Preferred embodiments of the invention are described with reference to the accompanying drawings, which show in:
Fig. 1 a normal dialog;
Fig. 2 dialog in case of an error detected by the CASS.

### Preferred embodiments

The inventive data bus can be used in connection with different types of slave units, e.g. with a control access subsystem for the D2MAC TV system family.
The following description part deals with the message-level interface between the decoder and such external control access subsystems (CASS)

### CONVENTIONS

- All CASS status flags/error codes are active at a logic '1' level.
- Hexadecimal numbers within this document are indicated by a leading apostrophe: 255 decimal = 'FF hexadecimal
- Command/response message content will be described as follows:
Command/Response Type : command/response type code

| Data field : | | |
|---|---|---|
| sub-field | length | description |
| 1 | 3 | sub-field 1, length 3 bytes, mandatory |
| 2 | 2 | sub-field 2, length 2 bytes, mandatory |
| [3] | 1 | sub-field 3, length 1 byte, optional |
| [4/3] | 1 | sub-field 4 or 3, length 1 byte, optional |

- Within a given decoder command or CASS response, the transmission of data sub-fields shall follow the order given in this specification. Within a data sub-field, individual bytes shall be transmitted least significant bit (lsbit) first and most significant bit (msbit) last.
- For a parameter coded on several bytes, the msbyte is transmitted first. The lsbyte is the byte containing the least significant data bit; the msbyte is the byte containing the most significant data bit.
- Example: see the case of an input EMM-G in the EUROCRYPT control access system.
In the response from the CASS to the decoder the parameter SA is to be transmitted:
b23.........b16 msbyte
b15..........b8
b7..........b0 lsbyte
Total of 3 bytes with the msbyte transmitted first.
- On the serial link between the decoder and the CASS the bits are transmitted as follows: 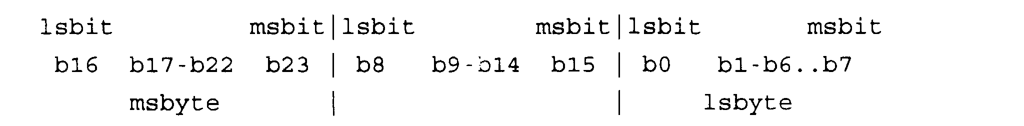 Bit b16 is transmitted first.
- The byte serialiser has to transmit the LS bit first as explained in paragraph physical link.
- Accuracies concerning sub-fields transmission (the example of the response to an EMM-G is taken):
3 parameters can be present in the response from the CASS:
(1): EMM-G response status (1 byte),
(2): Shared Address SA (3 bytes),
(3): INDMES parameter (4 bytes),
(4): WAK parameter (4 bytes).

(1) is mandatory: always transmitted.
(2), (3) and (4) are optional. The presence/absence of these parameters is indicated by flags in (1).
For example, in case of only (2) and (4) being transmitted, only 8 bytes have to be transmitted:

| (1) | (2) | (4) |
|---|---|---|
| 1 byte (A0h) | 3 bytes | 4 bytes |

The 4 bytes of (3) are not transmitted.
When the reply status byte - (1) in the example - indicates the presence/absence of some parameters, the order of these bits from the MSB to the LSB is the same as the order of the transmitted parameters.

### GENERAL MESSAGE FORMAT

The datalink layer is described in detail above.
Each command message sent to the CASS by the decoder contains a 6-bit Command Type code and a data field. The data field can have a length of 0 to 256 bytes.
Each response message sent to the decoder by the CASS contains a 6-bit Response Type code and a data field. The data field can have a length of 0 to 256 bytes.
If it is necessary to transmit more than 256 data bytes in response to a decoder command, the CASS will split the data field between several response messages (an initial message followed by one or more continuation messages). The presence of subsequent continuation messages is indicated by a flag in each response message.

The decoder must re-transmit its initial command to the CASS to recover each continuation message.

### GENERAL DECRYPTION MESSAGE FORMATS

### Initialise Service

This command is used to initialise the CASS (eg. after a channel change, soft reset, power-up etc.) or to indicate a change in access mode. On reception of this command, the CASS will examine the channel number to see if the channel has changed. If it has, the CASS will clear its packet buffers, any pending PC2 data transfers and PC2 configurations before replying to indicate ready status. If not, the CASS will take into account the new access mode without clearing these items.
DECODER → CASS
Command Type: 1

| Data field: | | |
|---|---|---|
| sub-field | length | description |
| 1 | 2 | channel ID (line 625 CHID) |
| 2 | 1 | CASS address/card reader |

CASS → DECODER
Response Type: 1
Data field: none

The 'channel ID' sub-field is a copy of the 16-bit CHID code contained in line 625. By definition, this code is unique for every satellite channel.

The 'CASS address/card reader' contains the address of the CASS and the address of the card reader for the selected CASS.

| | | | | | | | |
|---|---|---|---|---|---|---|---|
| b7 | b6 | b5 | b4 | b3 | b2 | b1 | b0 |
| CR | CASS5 | CASS4 | CASS3 | CASS2 | CASS1 | CASS0 | FORCEINIT |
| CR: card reader address coded on 1 bit | | | | | | | |
| CASS4...0: CASS address coded on 6 bits | | | | | | | |
| FORCEINIT: force initialisation & clear data stores (even if CHID has not changed) | | | | | | | |

### Report Unit Parameters

This command should be used to determine the card's unit parameters. These parameters are necessary for the reception of ECM, EMM-U and EMM-C messages.
DECODER → CASS
Command Type: 2
Data field: none
CASS → DECODER
Response Type: 2

| Data field: | | |
|---|---|---|
| sub-field | length | description |
| 1 | 5 | unique address (UA) |
| 2 | 2 | collective address (CCA) |
| 3 | 1 | access control system type |
| 4 | 1 | encrypting algorithm type |
| 5 | 1 | CASS version level |

The 'unique address' sub-field is coded as follows:

| | | | | | | | |
|---|---|---|---|---|---|---|---|
| b39 | b38 | b37 | b36 | b35 | b34 | b33 | b32 |
| 0 | 0 | 0 | 0 | UA35 | UA34 | UA33 | UA32 |
| | | | | | | | |
| b31 | b30 | b29 | b28 | b27 | b26 | b25 | b24 |
| UA31 | UA30 | UA29 | UA28 | UA27 | UA26 | UA25 | UA24 |
| · | | | | | | | |
| · | | | | | | | |
| · | | | | | | | |
| b7 | b6 | b5 | b4 | b3 | b2 | b1 | b0 |
| UA7 | UA6 | UA5 | UA4 | UA3 | UA2 | UA1 | UA0 |

The 'collective address' sub-field is coded as follows:

| | | | | | | | |
|---|---|---|---|---|---|---|---|
| b12 | b14 | b13 | b12 | b11 | b10 | b9 | b8 |
| 0 | 0 | 0 | 0 | CCA11 | CCA10 | CCA9 | CCA8 |
| b7 | b6 | b5 | b4 | b3 | b2 | b1 | b0 |
| CCA7 | CCA6 | CCA5 | CCA4 | CCA3 | CCA2 | CCA1 | CCA0 |

The 'access control system type' sub-field is coded as follows:

| | | | | | | | |
|---|---|---|---|---|---|---|---|
| b7 | b6 | b5 | b4 | b3 | b2 | b1 | b0 |
| ACST7 | ACST6 | ACST5 | ACST4 | ACST3 | ACST2 | ACST1 | ACST0 |

This sub-field enables the decoder to select ECM/EMM packets corresponding to the access control system used by the CASS. This sub-field corresponds to the CA byte contained in the ACCM and ACMM SI parameters describing the relevant ECM/EMM packet addresses. For the Eurocrypt system, the CA byte takes the value '40.

The 'encrypting algorithm type' sub-field is coded as follows:

| | | | | | | | |
|---|---|---|---|---|---|---|---|
| b7 | b6 | b5 | b4 | b3 | b2 | b1 | b0 |
| ALG7 | ALG6 | ALG5 | ALG4 | ALG3 | ALG2 | ALG1 | ALG0 |

This sub-field enables the decoder to select ECM/EMM packets corresponding to the encrypting algorithm used by the CASS. This sub-field corresponds to the first byte of the variable data field contained in the ACCM and ACMM SI parameters describing the relevant ECM/EMM packet addresses.

The 'CASS version level' byte is a simple 8-bit unsigned number indicating the release number of the CASS software.

### Input ECM

This command is used to input an ECM message to the CASS. The CASS will return any available control words, or a request for user action.
DECODER → CASS
Command Type: 3

| Data field: | | |
|---|---|---|
| sub-field | length | description |
| 1 | 90 max. | ECM message data (CI byte first) |

CASS → DECODER
Response Type: 3

| Data field: | | |
|---|---|---|
| sub-field | length | description |
| 1 | 1 | even CW authorisation status |
| 2 | 1 | odd CW authorisation status |
| [3] | 0/8/5 | [variable sub-field 0] |
| [4/3] | 0/8/5 | [variable sub-field 1] |

Variable sub-field 0 is coded as follows:

| | | |
|---|---|---|
| - | 0 | no data |
| or | | |
| 3 | 8 | even control word |
| or | | |
| 3 | 5 | PNUMB/PPV/P |
| or | | |
| 3 | 5 | PNUMB/PPV/T |

Variable sub-field 1 is coded as follows:

| | | |
|---|---|---|
| - | 0 | no data |
| or | | |
| 4/3 | 8 | odd control word |
| or | | |
| 4/3 | 5 | PNUMB/PPV/P |
| or | | |
| 4/3 | 5 | PNUMB/PPV/T |

It is possible to have different access criteria for the two control words (odd and even) contained in an ECM. For this reason, separate authorisation status codes must be provided for each control word. If a given control word cannot be computed, the corresponding control word sub-field will not be included in the CASS response.

The status code is as follows:

| | | | | | | | |
|---|---|---|---|---|---|---|---|
| b7 | b6 | b5 | b4 | b3 | b2 | b1 | b0 |
| OVERDR | BADGEO | MLACTIVE | PPVLOCK | NOENT | NOCRED | SUB1 | SUB0 |
| OVERDR: overdraft facility drawn | | | | | | | |

This code can be used by the decoder User Interface Manager (UIM) to generate an appropriate warning message. The control word will still be present in the CASS response when this flag is set.
BADGEO: card in unauthorised geographical area
This code should be used by the decoder to handle replacement services for blacked-out customer groups. When this flag is set, no control word will be present in the CASS response. MLACTIVE: reference maturity rating active
The card reference maturity rating is active and lower than the programme's maturity level. To view the programme, the user must change the current maturity level via a PIN code entry. This code can be used by the decoder UIM to generate appropriate menus. When this flag is set, no control word will be present in the CASS response.
PPVLOCK: card locked for impulse pay-per-view
The card IPPV lock is active. To view the programme in IPPV mode, the user must disactivate the IPPV lock via a PIN code entry. This code can be used by the decoder UIM to generate appropriate menus. When this flag is set, no control word will be present in the CASS response.
NOENT: no entitlement for current programme
This code can be used by the decoder UIM in conjunction with NOCRED and RPPV/P or RPPV/T to generate appropriate menus (see below). When this flag is set, no control word will be present in the CASS response.
NOCRED: not enough credit to view current programme
This code can be used by the decoder UIM in conjunction with NOENT and RPPV/P or RPPV/T to generate appropriate menus. When this flag is set, no control word will be present in the CASS response.
SUB1=0, SUB0=0:
nothing special.
SUB1=1, SUB0=1:
programme bought in PPV/T.
SUB1=1, SUB0=0:
RPPV/P: request for customer agreement for impulse pay-per-view per programme
This code can be used by the decoder UIM to generate a 'confirm impulse pay-per-view purchase' pop-up menu. When this flag is set, a PNUMB/PPV/P sub-field will be included in the CASS response as described above.

The 'PNUMB' sub-field is coded as follows:

| b23 | b22 | b21 | b20 | b19 | b18 | b17 | b16 |
|---|---|---|---|---|---|---|---|
| PNUMB23 | PNUMB22 | PNUMB21 | PNUMB20 PNUMB19 | | PNUMB18 | PNUMB17 | PNUMB16 |
| · | | | | | | | |
| · | | | | | | | |
| · | | | | | | | |

| b7 | b6 | b5 | b4 | b3 | b2 | bl | b0 |
|---|---|---|---|---|---|---|---|
| PNUMB7 | PNUMB6 | PNUMB5 | PNUMB4 | PNUMB3 | PNUMB2 | PNUMB1 | PNUMB0 |
| PNUMB23-0: PNUMB reference of pay-per-view programme | | | | | | | |

The 'PPV/P' sub-field is coded as follows:

| b15 | b14 | b13 | b12 | b11 | b10 | b9 | b8 |
|---|---|---|---|---|---|---|---|
| PPV/P7 | PPV/P6 | PPV/P5 | PPV/P4 | PPV/P3 | PPV/P2 | PPV/P1 | PPV/P0 |
| | | | | | | | |

| b7 | b6 | b5 | b4 | b3 | b2 | b1 | b0 |
|---|---|---|---|---|---|---|---|
| FRPPV/P7 | FRPPV/P6 | FRPPV/P5 | FRPPV/P4 | FRPPV/P3 | FRPPV/P2 | FRPPV/P1 | FRPPV/P0 |
| PPV/P7-0: integer part of PPV/P cost per programme | | | | | | | |
| FRPPV/P7-0: fractional part of PPV/P cost per programme | | | | | | | |

The PPV/P sub-field can be used by the decoder UIM to display the programme cost to the user. The PNUMB sub-field can be used to associate a customer's pay-per-view agreement with a particular programme.
SUB1=0, SUB0=1:
RPPV/T: request for customer agreement for impulse pay-per-view per time
This code can be used by the decoder UIM to generate a 'confirm impulse pay-per-view purchase' pop-up menu. When this flag is set, a PNUMB/PPV/P sub-field will be included in the CASS response as described above.

The 'PPV/T' sub-field is coded as follows:

| b15 | b14 | b13 | b12 | b11 | b10 | b9 | b8 |
|---|---|---|---|---|---|---|---|
| PPV/T7 | PPV/T6 | PPV/T5 | PPV/T4 | PPV/T3 | PPV/T2 | PPV/T1 | PPV/T0 |
| | | | | | | | |

| b7 | b6 | b5 | b4 | b3 | b2 | b1 | b0 |
|---|---|---|---|---|---|---|---|
| FRPPV/T7 | FRPPV/T6 | FRPPV/T5 | FRPPV/T4 | FRPPV/T3 | FRPPV/T2 | FRPPV/T1 | FRPPV/T0 |
| PPV/T7-0: integer part of PPV/T cost rate | | | | | | | |
| FRPPV/T7-0: fractional part of PPV/T cost rate | | | | | | | |

The PPV/T sub-field can be used by the decoder UIM to display the programme cost rate to the user. The PNUMB sub-field can be used to associate a customer's pay-per-view agreement with a particular programme.

The various combinations of NOENT, NOCRED and RPPV/x are as follows:

| NOENT | NOCRED | RPPV/x | Meaning |
|---|---|---|---|
| 0 | 0 | 0 | The current programme is accessible in subscription mode (the default access mode) |
| 0 | 0 | 1 | The current programme is only accessible in pay-per-view mode |
| 0 | 1 | 0 | Will not occur |
| 0 | 1 | 1 | Will not occur |
| 1 | 0 | 0 | The current programme is not accessible |
| 1 | 0 | 1 | Will not occur |
| 1 | 1 | 0 | The current programme is accessible in pay-per-view mode, but the user does not have enough credit |
| 1 | 1 | 1 | Will not occur. |

The odd/even control word sub-fields are coded as follows:

| b63 | b62 | b61 | b60 | b59 | b58 | b57 | b56 |
|---|---|---|---|---|---|---|---|
| 0 | 0 | 0 | 0 | CW59 | CW58 | CW57 | CW56 |
| | | | | | | | |

| b55 | b54 | b53 | b52 | b51 | b50 | b49 | b48 |
|---|---|---|---|---|---|---|---|
| CW55 | CW54 | CW53 | CW52 | CW51 | CW50 | CW49 | CW48 |
| · | | | | | | | |
| · | | | | | | | |
| · | | | | | | | |

| b7 | b6 | b5 | b4 | b3 | b2 | b1 | b0 |
|---|---|---|---|---|---|---|---|
| CW7 | CW6 | CW5 | CW4 | CW3 | CW2 | CW1 | CW0 |

### Input EMM-U

DECODER → CASS
Command Type: 4

| Data field: | | |
|---|---|---|
| sub-field | length | description |
| 1 | 80 max. | EMM-U message data (CI byte first) |

CASS → DECODER
Response Type: 4

| Data field: | | |
|---|---|---|
| sub-field | length | description |
| 1 | 1 | EMM-U response status |
| [2] | 4 | INDMES individual message teletext co-ordinates |
| [3/2] | 4 | WAK decoder wake-up time |

The INDMES sub-field will contain the teletext coordinates of a personal message page in the case where this facility is used by the programme provider to broadcast a text message to one user. The WAK sub-field will contain a decoder wake-up time in the case where this facility is used by the programme provider to broadcast a wake-up time to one user.

The presence of the sub-fields INDMES and WAK in the response is indicated in the EMM-U Response Status byte as follows:

| | | | | | | | |
|---|---|---|---|---|---|---|---|
| b7 | b6 | b5 | b4 | b3 | b2 | b1 | b0 |
| INDMES | WAK | 0 | 0 | 0 | 0 | 0 | 0 |
| INDMES: INDMES sub-field included in response | | | | | | | |
| WAK: WAK sub-field included in response | | | | | | | |

If not available, the INDMES or WAK sub-fields will not be included in the CASS response.

The INDMES sub-field is coded as follows:

| b31 | b30 | b29 | b28 | b27 | b26 | b25 | b24 |
|---|---|---|---|---|---|---|---|
| S7 | S6 | S5 | S4 | S3 | S2 | S1 | S0 |
| | | | | | | | |

| b23 | b22 | b21 | b20 | b19 | b18 | b17 | b16 |
|---|---|---|---|---|---|---|---|
| I7 | I6 | I5 | I4 | I3 | I2 | I1 | I0 |
| | | | | | | | |

| b15 | b14 | b13 | b12 | b11 | b10 | b9 | b8 |
|---|---|---|---|---|---|---|---|
| 0 | 0 | 0 | DIS | PRI | TM2 | TM1 | TM0 |
| | | | | | | | |

| b7 | b6 | b5 | b4 | b3 | b2 | b1 | b0 |
|---|---|---|---|---|---|---|---|
| TP7 | TP6 | TP5 | TP4 | TP3 | TP2 | TP1 | TP0 |

S7-S0: D2MAC teletext service type. This field gives the first byte of the D2MAC SI parameter LISTX describing the teletext service carrying personal messages.

I7-I0: D2MAC teletext service index. This field gives the second byte of the D2MAC SI parameter LISTX describing the teletext service carrying personal messages.

TM2-TM0: Teletext magazine used for the personal message serice (in range 0 to 7)

TP7-TP0: Teletext page used for the personal message (in range 0 to 'FF)

PRI: Message priority
1: immediate display on screen
0: message to be stocked in mailbox

DIS: Display mode in case where high-priority message must be displayed on screen
1: text background = video image
0: text background = blank screen

The WAK sub-field is coded as follows:

| b31 | b30 | b29 | b28 | b27 | b26 | b25 | b24 |
|---|---|---|---|---|---|---|---|
| YR6 | YR5 | YR4 | YR3 | YR2 | YR1 | YR0 | MTH3 |
| | | | | | | | |

| b23 | b22 | b21 | b20 | b19 | b18 | b17 | b16 |
|---|---|---|---|---|---|---|---|
| MTH2 | MTH1 | MTH0 | DAY4 | DAY3 | DAY2 | DAY1 | DAY0 |
| | | | | | | | |

| b15 | b14 | b13 | b12 | b11 | b10 | b9 | b8 |
|---|---|---|---|---|---|---|---|
| HR4 | HR3 | HR2 | HR1 | HR0 | MIN2 | MIN1 | MIN0 |
| | | | | | | | |

| b7 | b6 | b5 | b4 | b3 | b2 | b1 | b0 |
|---|---|---|---|---|---|---|---|
| DUR_HR4 | DUR_HR3 | DUR_HR2 | DUR_HR1 | DUR_HR0 | DUR_MIN2 | DUR_MIN1 | DUR_MIN0 |

YR6-0: 0 ≤ YR ≤ 127
Wake-up year. This is expressed as an offset with reference to the year 1980. If the MTH field is zero, this field defines a periodic wake-up as follows:
YR = 0: monthly wake-up on the day specified by the DAY field
YR = 1 to 7: weekly wake-up on weekday 1 to 7 (Monday = 1, Sunday = 7); in this case, the DAY field is ignored.
MTH3-0: 1 ≤ MTH ≤ 12
Wake-up month: January = 1. If this field is zero, the wake-up is periodic, otherwise, the wake-up is on the given date. DAY4-0: 1 ≤ DAY ≤ 31
Wake-up day. This field changes at 0000 hrs UTC (Coordinated Universal Time).
HR4-0: 0 ≤ HR ≤ 23, Wake-up hour.
MIN3-0: 0 ≤ MIN ≤ 5, Wake-up minutes: tens of minutes. DUR_HR4-0: 0 ≤ DUR_HR ≤ 23, Wake-up duration: hours.
DUR MIN3-0: 0 ≤ DUR_MIN ≤ 5, Wake-up duration: tens of minutes.

### Input EMM-G

This command is used to input an EMM-G message.
DECODER → CASS
Command Type: 5

| Data field : | | |
|---|---|---|
| sub-field | length | description |
| 1 | 90 max. | EMM-G message data (CI byte first) |

CASS → DECODER
Response Type: 5

| Data field: | | |
|---|---|---|
| sub-field | length | description |
| 1 | 1 | EMM-G response status |
| [2] | 3 | Shared Address SA |
| [2] | 4 | INDMES individual message teletext coordinates |
| [3/2] | 4 | WAK decoder wake-up time |

The SA sub-field contains the CASS shared address for the operator generating the EMM-G. This address should be used by the decoder to recover the EMM-S message that is associated with this EMM-G. If no SA field is included in the CASS response, no EMM-S messages are associated with this EMM-G.

The INDMES sub-field will contain the teletext coordinates of a personal message page in the case where this facility is used by the programme provider to broadcast a text message to all users. The WAK sub-field will contain a decoder wake-up time in the case where this facility is used by the programme provider to broadcast a wake-up time to all users. The SA sub-field will never occur in the same CASS response as INDMES or WAK.

The presence of the sub-fields SA, INDMES and WAK in the response is indicated in the EMM-G Response Status byte as follows:

| | | | | | | | |
|---|---|---|---|---|---|---|---|
| b7 | b6 | b5 | b4 | b3 | b2 | b1 | b0 |
| SA | INDMES | WAK | 0 | 0 | 0 | 0 | 0 |
| SA: SA sub-field included in response INDMES: INDMES sub-field included in response WAK: WAK sub-field included in response | | | | | | | |

If not available, the SA, INDMES or WAK sub-fields will not be included in the CASS response.

The INDMES and WAK fields are coded as above. The SA sub-field is coded as follows:

| | | | | | | | |
|---|---|---|---|---|---|---|---|
| b23 | b22 | b21 | b20 | b19 | b18 | b17 | b16 |
| SA23 | SA22 | SA21 | SA20 | SA19 | SA18 | SA17 | SA16 |
| | | | | | | | |
| b7 | b6 | b5 | b4 | b3 | b2 | b1 | b0 |
| SA7 | SA6 | SA5 | SA4 | SA3 | SA2 | SA1 | SA0 |

### Input EMM-S

This command is used to input an EMM-S message.
DECODER → CASS
Command Type: 6

| Data field: | | |
|---|---|---|
| sub-field | length | description |
| 1 | 42 max. | EMM-S message data (CI byte first) |

Data field: CASS → DECODER
Response Type: 6

| Data field: | | |
|---|---|---|
| sub-field | length | description |
| 1 | 1 | EMM-S response status |
| [2] | 4 | INDMES individual message teletext coordinates |
| [3/2] | 4 | WAK decoder wake-up time |

Data field: The INDMES sub-field will contain the teletext coordinates of a personal message page in the case where this facility is used by the programme provider to broadcast a text message to a group of users. The WAK sub-field will contain a decoder wake-up time in the case where this facility is used by the programme provider to broadcast a wake-up time to a group of users.

The presence of the sub-fields INDMES and WAK in the response is indicated in the EMM-S Response Status byte as follows:

| | | | | | | | |
|---|---|---|---|---|---|---|---|
| b7 | b6 | b5 | b4 | b3 | b2 | b1 | b0 |
| INDMES | WAK | 0 | 0 | 0 | 0 | 0 | 0 |
| INDMES:INDMES sub-field included in response WAK: WAK sub-field included in response | | | | | | | |

If not available, the INDMES or WAK sub-fields will not be included in the CASS response.

The INDMES and WAK fields are coded as above.

### Input EMM-C

This command is used to input an EMM-C message. EMM-C messages are used to transmit blackout replacement and fingerprinting configurations to group-addressed receivers.
DECODER → CASS
Command Type: 7

| Data field: | | |
|---|---|---|
| sub-field | length | description |
| 1 | 86 max. | EMM-C message data (CI byte first) |

Data field: CASS → DECODER
Response Type: 7

| Data field: | | |
|---|---|---|
| sub-field | length | description |
| 1 | 1 | EMM-C response status |
| [2] | 2 | TPP1 teletext page for video replacement |
| [3/2] | 3 | RCI-R1 TV sound replacement |
| [4/3/2] | 6 | RCI-02, RCI-R2 additional digital radio or teletext replacement |
| [5/4/3/2] | 2 | TPP2 teletext page for fingerprinting |
| [6/5/4/3/2] | 2 | FCTRL fingerprinting control |

Data field: The presence of the various sub-fields in the reply is indicated in the EMM-C Response Status byte as follows:

| b7 | b6 | b5 | b4 | b3 | b2 | b1 | b0 |
|---|---|---|---|---|---|---|---|
| TPP1 | RCI-R1 | RCI-02R2 | TPP2 | FCTRL | 0 | 0 | 0 |
| TPP1: TPP1 sub-field included in response | | | | | | | |
| RCI-R1: RCI-R1 sub-field included in response | | | | | | | |
| RCI-02R2: RCI-02, RCI-R2 sub-field included in response | | | | | | | |
| TPP2: TPP2 sub-field included in response | | | | | | | |
| FCTRL: FCTRL sub-field included in response | | | | | | | |

These parameters are defined in 'Access Control System for the MAC/Packet Family: EUROCRYPT', July 1991.

### USER INTERFACE MESSAGE FORMATS

### Report PC2 Lock Status

DECODER → CASS
Command Type: 8
Data field: none
CASS → DECODER
Response Type: 8

| Data field: | | |
|---|---|---|
| sub-field | length | description |
| 1 | 1 | PC2 status |

The 'PC2 status' sub-field is coded as follows:

| b7 | b6 | b5 | b4 | b3 | b2 | b1 | b0 |
|---|---|---|---|---|---|---|---|
| 0 | 0 | 0 | 0 | PRELOCK | CONLOCK | MLACTIV | EPPVLOCK |
| PRELOCK: card locked for programme preselection | | | | | | | |
| CONLOCK: card locked for consultation | | | | | | | |
| MLACTIVE: card maturity level active | | | | | | | |
| PPVLOCK: card locked for impulse pay-per-view | | | | | | | |

lock status = 0 <=====> locked.
**Modify PC2 Lock Status**
DECODER → CASS
Command Type: 9

| Data field: | | |
|---|---|---|
| sub-field | length | description |
| 1 | 8 | PIN code |
| 2 | 1 | new status |

CASS → DECODER
Response Type: 9

| Data field: | | |
|---|---|---|
| sub-field | length | description |
| 1 | 1 | status confirmation |

The PIN code sent in this command consists of 8 bytes, i.e. 16 digits. If the PIN code chosen by the user is less than 16 digits long, the decoder UIM should fill the most significant bytes with zeroes, e.g.:

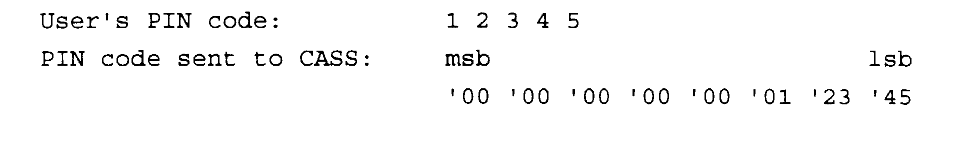

The 'new status' sub-field is coded as for 'PC2 status' above.

The 'status confirmation' sub-field is coded as follows:

| b7 | b6 | b5 | b4 | b3 | b2 | b1 | b0 |
|---|---|---|---|---|---|---|---|
| BADPIN | NOPIN | 0 | 0 | PRELOCK | CONLOCK | MLACTIVE | PPVLOCK |
| BADPIN: PIN code is incorrect | | | | | | | |
| NOPIN: no PIN code in card | | | | | | | |
| PRELOCK, CONLOCK, MLACTIVE, PPVLOCK: new status (equals previous status if BADPIN = 1) | | | | | | | |

lock status = 0 <=====> locked.

### Report Reference Maturity Level

DECODER → CASS
Command Type: 10
Data field: none
CASS → DECODER
Response Type: 10

| Data field: | | |
|---|---|---|
| sub-field | length | description |
| 1 | 1 | reference maturity level |

The 'reference maturity level' sub-field is coded as follows:

| | | | | | | | |
|---|---|---|---|---|---|---|---|
| b7 | b6 | b5 | b4 | b3 | b2 | b1 | b0 |
| COD | 0 | 0 | 0 | ML3 | ML2 | ML1 | ML0 |
| ML3-0: reference maturity level COD: type of coding | | | | | | | |

### Modify Reference Maturity Level

DECODER → CASS
Command Type: 11

| Data field: | | |
|---|---|---|
| sub-field | length | description |
| 1 | 8 | PIN code |
| 2 | 1 | new reference maturity level |

CASS → DECODER
Response Type: 11

| Data field: | | |
|---|---|---|
| sub-field | length | description |
| 1 | 1 | reference maturity level confirmation |

The 'new reference maturity level' sub-field is coded as for 'reference maturity level' above.

The 'reference maturity level confirmation' sub-field is coded as follows:

| | | | | | | | |
|---|---|---|---|---|---|---|---|
| b7 | b6 | b5 | b4 | b3 | b2 | b1 | b0 |
| BADPIN | NOPIN | 0 | 0 | ML3 | ML2 | ML1 | ML0 |
| BADPIN: PIN code is incorrect NOPIN: no PIN code in card ML3-0: new reference maturity level (equals previous reference maturity level if BADPIN = 1) | | | | | | | |

### Modify PIN Code

DECODER → CASS
Command Type: 12

| Data field: | | |
|---|---|---|
| sub-field | length | description |
| 1 | 8 | PIN code |
| 2 | 8 | new PIN code |

CASS → DECODER
Response Type: 12

| Data field: | | |
|---|---|---|
| sub-field | length | description |
| 1 | 1 | reply status |

The 'PIN code' and 'new PIN code' sub-fields are coded as above.

The 'reply status' sub-field is coded as follows:

| | | | | | | | |
|---|---|---|---|---|---|---|---|
| b7 | b6 | b5 | b4 | b3 | b2 | b1 | b0 |
| BADPIN | NOPIN | 0 | 0 | 0 | 0 | 0 | 0 |
| BADPIN: PIN code is incorrect | | | | | | | |
| NOPIN: no PIN code in card | | | | | | | |

The PIN code is restricted to the 2 LS bytes (0 ---> 9).

### Report Current Programme Parameters

This command can be used to obtain information concerning the current programme. The CASS will reply with information concerning the last PPID sent to the CASS (ie. in an ECM, EMM-U, EMM-G or EMM-C message). After a channel change (eg. an 'Initialise Service' command), the CASS will clear any PPID information it has: hence the decoder should wait until one of the above messages has been sent to the CASS before using this command.
DECODER → CASS
Command Type: 13
Data field: none
CASS → DECODER
Response Type: 13

| Data field: | | |
|---|---|---|
| sub-field | length | description |
| 1 | 1 | reply status |
| [2] | 3 | PPID |
| [3] | 16 | LABEL |
| [4] | 1 | authorised access modes |

The 'reply status' sub-field is coded as follows:

| b7 | b6 | b5 | b4 | b3 | b2 | b1 | b0 |
|---|---|---|---|---|---|---|---|
| PP | LBL | ACC | 0 | 0 | 0 | 0 | 0 |
| PP: PPID sub-field present in response | | | | | | | |
| LBL: LABEL sub-field present in response | | | | | | | |
| ACC: available access modes sub-field present in response | | | | | | | |

The PPID sub-field is coded as follows:

| b23 | b22 | b21 | b20 | b19 | b18 | b17 | b16 |
|---|---|---|---|---|---|---|---|
| PPID23 | PPID22 | PPID21 | PPID20 | PPID19 | PPID18 | PPID17 | PPID16 |
| · | | | | | | | |
| · | | | | | | | |
| · | | | | | | | |

| b7 | b6 | b5 | b4 | b3 | b2 | b1 | b0 |
|---|---|---|---|---|---|---|---|
| PPID3 | PPID2 | PPID1 | PPID0 | 0 | 0 | 0 | 0 |
| PPID23-0: current PPID | | | | | | | |

The LABEL sub-field is coded as follows:

| b127 | b126 | b125 | b124 | b123 | b122 | b121 | b120 |
|---|---|---|---|---|---|---|---|
| LABEL127 | LABEL126 | LABEL125 | LABEL124 | LABEL123 | LABEL122 | LABEL121 | LABEL120 |
| · | | | | | | | |
| · | | | | | | | |
| · | | | | | | | |
| | | | | | | | |

| b7 | b6 | b5 | b4 | b3 | b2 | b1 | b0 |
|---|---|---|---|---|---|---|---|
| LABEL7 | LABEL6 | LABEL5 | LABEL4 | LABEL3 | LABEL2 | LABEL1 | LABEL0 |

LABEL127-0: LABEL of current programme provider
This sub-field consists of ASCII bytes; in the case where the length of the LABEL string is less than 16 characters, this sub-field will be padded with null ASCII bytes ('00) as follows:
LABEL returned by card: CANAL+
LABEL field in CASS response:

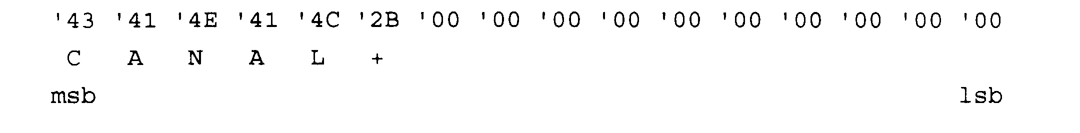

The 'access modes' sub-field is coded as follows:

| | | | | | | | |
|---|---|---|---|---|---|---|---|
| b7 | b6 | b5 | b4 | b3 | b2 | b1 | b0 |
| 0 | 0 | 0 | PPV/T | PPV/P | PREPPV | SUBCL | SUBTH/L |
| PPV/T: pay-per-view per time authorised | | | | | | | |
| PPV/P: pay-per-view per programme authorised | | | | | | | |
| PREPPV: pre-booked pay-per-view per programme authorised | | | | | | | |
| SUBCL: subscription per class authorised | | | | | | | |
| SUBTH/L: subscription per theme/level authorised | | | | | | | |

### Report Card Entities

DECODER → CASS
Command Type: 14
Data field: none CASS → DECODER
Response Type: 14

| Data field: | | |
|---|---|---|
| sub-field | length | description |
| 1 | 19 | Issuer Entity PPID/LABEL |
| [2] | 19 | Service Entity PPID/LABEL |
| · | | |
| · | | |
| · | | |
| [N] | 19 | Service Entity PPID/LABEL |

The CASS response will always contain the PPID/LABEL of the issuer entity (which is always present n the PC2). These will be followed by zero or more PPID/LABEL sub-fields corresponding to service entities in the card.

The PPID/LABEL sub-field is coded as follows:

| b151 | b150 | b149 | b148 | b147 | b146 | b145 | b144 |
|---|---|---|---|---|---|---|---|
| PPID19 | PPID18 | PPID17 | PPID16 | PPID15 | PPID14 | PPID13 | PPID12 |
| · | | | | | | | |
| · | | | | | | | |
| · | | | | | | | |

| b135 | b134 | b133 | b132 | b131 | b130 | b129 | b128 |
|---|---|---|---|---|---|---|---|
| PPID3 | PPID2 | PPID1 | PPID0 | 0 | 0 | 0 | 0 |

| b127 | b126 | b125 | b124 | b123 | b122 | b121 | b120 |
|---|---|---|---|---|---|---|---|
| LABEL127 | LABEL126 | LABEL125 | LABEL124 | LABEL123 | LABEL122 | LABEL121 | LABEL120 |
| · | | | | | | | |
| · | | | | | | | |
| · | | | | | | | |

| b7 | b6 | b5 | b4 | b3 | b2 | b1 | b0 |
|---|---|---|---|---|---|---|---|
| LABEL7 | LABEL6 | LABEL5 | LABEL4 | LABEL3 | LABEL2 | LABEL1 | LABEL0 |
| PPID23-0: PPID code of PC2 entity | | | | | | | |
| LABEL127-0: LABEL of PC2 entity | | | | | | | |

### Report Remaining Credit

DECODER → CASS
Command Type: 15

| Data field: | | |
|---|---|---|
| sub-field | length | description |
| 1 | 3 | PPID |

CASS → DECODER
Response Type: 15

| Data field: | | |
|---|---|---|
| sub-field | length | description |
| 1 | 1 | reply status |
| [2] | 4 | remaining credit |

The 'reply status' sub-field is coded as follows:

| b7 | b6 | b5 | b4 | b3 | b2 | b1 | b0 |
|---|---|---|---|---|---|---|---|
| CONLOCK | NOCRED | 0 | 0 | 0 | 0 | 0 | 0 |
| CONLOCK: the card is locked for consulting confidential information | | | | | | | |
| NOCRED: this PPID does not have any PPV credit entitlement | | | | | | | |

The 'remaining credit' sub-field is coded as follows:

| b31 | b30 | b29 | b28 | b27 | b26 | b25 | b24 |
|---|---|---|---|---|---|---|---|
| CR15 | CR14 | CR13 | CR12 | CR11 | CR10 | CR9 | CR8 |
| | | | | | | | |

| b23 | b22 | b21 | b20 | b19 | b18 | b17 | b16 |
|---|---|---|---|---|---|---|---|
| CR7 | CR6 | CR5 | CR4 | CR3 | CR2 | CR1 | CR0 |
| | | | | | | | |

| b15 | b14 | b13 | b12 | b11 | b10 | b9 | b8 |
|---|---|---|---|---|---|---|---|
| FR15 | FR14 | FR13 | FR12 | FR11 | FR10 | FR9 | FR8 |
| | | | | | | | |

| b7 | b6 | b5 | b4 | b3 | b2 | b1 | b0 |
|---|---|---|---|---|---|---|---|
| UFR7 | FR6 | FR5 | FR4 | FR3 | FR2 | FR1 | FR0 |
| CR15-0: integer part of remaining credit | | | | | | | |
| FR15-0: fractional part of remaining credit | | | | | | | |

If CONLOCK or NOCRED = 1, the 'remaining credit' sub-field will not be included in the CASS response.

### Report Allowed Overdraft

DECODER → CASS
Command Type: 16

| Data field: | | |
|---|---|---|
| sub-field | length | description |
| 1 | 3 | PPID |

Data field: CASS → DECODER
Response Type: 16

| Data field: | | |
|---|---|---|
| sub-field | length | description |
| 1 | 1 | reply status |
| [2] | 2 | allowed overdraft |

The 'reply status' sub-field is coded as follows:

| | | | | | | | |
|---|---|---|---|---|---|---|---|
| b7 | b6 | b5 | b4 | b3 | b2 | b1 | b0 |
| CONLOCK | NOOVER | 0 | 0 | 0 | 0 | 0 | 0 |
| CONLOCK: the card is locked for consulting confidential information | | | | | | | |
| NOOVER: this PPID does not have any credit overdraft entitlement | | | | | | | |

The 'allowed overdraft' sub-field is coded as follows:

| | | | | | | | |
|---|---|---|---|---|---|---|---|
| b15 | b14 | b13 | b12 | b11 | b10 | b9 | b8 |
| OD7 | OD6 | OD5 | OD4 | OD3 | OD2 | OD1 | OD0 |
| | | | | | | | |
| b7 | b6 | b5 | b4 | b3 | b2 | b1 | b0 |
| FROD7 | FROD6 | FROD5 | FROD4 | FROD3 | FROD2 | FROD1 | FROD0 |
| OD7-0: unit allowed overdraft | | | | | | | |
| FROD7-0: fractions of units allowed overdraft | | | | | | | |

If CONLOCK or NOOVER = 1, the 'allowed overdraft' sub-field will not be included in the CASS response.

### Report Pay-Per-View Per Time Ceiling

DECODER → CASS
Command Type: 17
Data field: none
CASS → DECODER
Response Type: 17

| Data field: | | |
|---|---|---|
| sub-field | length | description |
| 1 | 4 | PPV/T ceiling |

The 'PPV/T ceiling' sub-field in the CASS response is coded as follows:

| | | | | | | | |
|---|---|---|---|---|---|---|---|
| b31 | b30 | b29 | b28 | b27 | b26 | b25 | b24 |
| CEIL31 | CEIL30 | CEIL29 | CEIL28 | CEIL27 | CEIL26 | CEIL25 | CEIL24 |
| · | | | | | | | |
| · | | | | | | | |
| · | | | | | | | |
| b7 | b6 | b5 | b4 | b3 | b2 | b1 | b0 |
| CEIL7 | CEIL6 | CEIL5 | CEIL4 | CEIL3 | CEIL2 | CEIL1 | CEIL0 |
| CEIL31-0: PPV/T ceiling | | | | | | | |

### Modify Pay-Per-View Per Time Ceiling

DECODER → CASS
Command Type: 18

| Data field: | | |
|---|---|---|
| sub-field | length | description |
| 1 | 8 | PIN code |
| 2 | 4 | new PPV/T ceiling |

CASS → DECODER
Response Type: 18

| Data field: | | |
|---|---|---|
| sub-field | length | description |
| 1 | 1 | reply status |
| 2 | 4 | PPV/T ceiling confirmation |

The 'reply status' sub-field is coded as follows:

| | | | | | | | |
|---|---|---|---|---|---|---|---|
| b7 | b6 | b5 | b4 | b3 | b2 | b1 | b0 |
| BADPIN | NOPIN | 0 | 0 | 0 | 0 | 0 | 0 |
| BADPIN: PIN code is incorrect | | | | | | | |
| NOPIN: no PIN code in card | | | | | | | |

The 'new PPV/T ceiling' and PPV/T ceiling confirmation' subfields are coded as for 'PPV/T ceiling' above. If BADPIN = 1, the 'PPV/T ceiling confirmation' sub-field will contain the previous ceiling.

### Report Subscriptions by Theme/Level

DECODER → CASS
Command Type: 19

| Data field: | | |
|---|---|---|
| sub-field | length | description |
| 1 | 3 | PPID |
| 2 | 4 | DATES |

CASS → DECODER
Response Type: 19

| Data field: | | |
|---|---|---|
| sub-field | length | description |
| 1 | 1 | reply status |
| [2] | 6 | DATES/THEME/LEVEL |
| · | | |
| · | | |
| · | | |
| [N] | 6 | DATES/THEME/LEVEL |

The DATES sub-field in the decoder-CASS command delimits the period of enquiry. This sub-field is coded as follows:

| | | | | | | | |
|---|---|---|---|---|---|---|---|
| b31 | b30 | b29 | b28 | b27 | b26 | b25 | b24 |
| BDY6 | BDY5 | BDY4 | BDY3 | BDY2 | BDY1 | BDY0 | BDM3 |
| | | | | | | | |
| b23 | b22 | b21 | b20 | b19 | b18 | b17 | b16 |
| BDM2 | BDM1 | BDM0 | BDD4 | BDD3 | BDD2 | BDD1 | BDD0 |
| | | | | | | | |
| b15 | b14 | b13 | b12 | b11 | b10 | b9 | b8 |
| FDY6 | FDY5 | FDY4 | FDY3 | FDY2 | FDY1 | FDY0 | FDM3 |
| | | | | | | | |
| b7 | b6 | b5 | b4 | b3 | b2 | b1 | b0 |
| FDM2 | FDM1 | FDM0 | FDD4 | FDD3 | FDD2 | FDD1 | FDD0 |
| BDY6-0: beginning date - year | | | | | | | |
| BDM3-0: beginning date - month | | | | | | | |
| BDD4-0: beginning date - day | | | | | | | |
| FDY6-0: finishing date - year | | | | | | | |
| FDM3-0: finishing date - month | | | | | | | |
| FDD4-0: finishing date - day | | | | | | | |

The 'year' field is an offset which must be added to a base of 1980, eg. Date = 15th January 1988:
year field = 8 ≡ 0001000
month field = 1 ≡ 0001
day field = 15 ≡ 01111

The BD field must always be less than the FD field, ie. the beginning date should always fall before the finishing date.

The 'reply status' sub-field is coded as follows:

| | | | | | | | |
|---|---|---|---|---|---|---|---|
| b7 | b6 | b5 | b4 | b3 | b2 | b1 | b0 |
| CONLOCK | NOSUB | COD | 0 | 0 | 0 | 0 | 0 |
| CONLOCK: the card is locked for consulting confidential information | | | | | | | |
| NOSUB: the selected PPID does not contain any subscriptions by theme/level | | | | | | | |
| COD: type of coding | | | | | | | |

The response will contain zero or more DATES/THEME/LEVEL subfields, coded as follows:

| | | | | | | | |
|---|---|---|---|---|---|---|---|
| b47 | b46 | b45 | b44 | b43 | b42 | b41 | b40 |
| BDY6 | BDY5 | BDY4 | BDY3 | BDY2 | BDY1 | BDY0 | BDM3 |
| | | | | | | | |
| b39 | b38 | b37 | b36 | b35 | b34 | b33 | b32 |
| BDM2 | BDM1 | BDM0 | BDD4 | BDD3 | BDD2 | BDD1 | BDD0 |
| | | | | | | | |
| b31 | b30 | b29 | b28 | b27 | b26 | b25 | b24 |
| FDY6 | FDY5 | FDY4 | FDY3 | FDY2 | FDY1 | FDY0 | FDM3 |
| | | | | | | | |
| b23 | b22 | b21 | b20 | b19 | b18 | b17 | b16 |
| FDM2 | FDM1 | FDM0 | FDD4 | FDD3 | FDD2 | FDD1 | FDD0 |
| | | | | | | | |
| b15 | b14 | b13 | b12 | b11 | b10 | b9 | b8 |
| TH7 | TH6 | TH5 | TH4 | TH3 | TH2 | TH1 | TH0 |
| | | | | | | | |
| b7 | b6 | b5 | b4 | b3 | b2 | b1 | b0 |
| LE7 | LE6 | LE5 | LE4 | LE3 | LE2 | LE1 | LE0 |
| BDY6-0: subscription period (coded as above) | | | | | | | |
| BDM3-0: " | | | | | | | |
| BDD4-0: " | | | | | | | |
| FDY6-0: " | | | | | | | |
| FDM3-0: " | | | | | | | |
| FDD4-0: " | | | | | | | |
| TH7-0: subscription theme | | | | | | | |
| LE7-0: subscription level | | | | | | | |

If CONLOCK or NOSUB = 1, no DATES/THEME/LEVEL sub-fields will be present in the CASS response.

### Report Subscriptions by Class

DECODER → CASS
Command Type: 20

| Data field: | | |
|---|---|---|
| sub-field | length | description |
| 1 | 3 | PPID |
| 2 | 4 | DATES |

CASS → DECODER
Response Type: 20

| Data field: | | |
|---|---|---|
| sub-field | length | description |
| 1 | 1 | reply status |
| [2] | 7 | DATES/CUSTWD |
| · | | |
| · | | |
| · | | |
| [N] | 7 | DATES/CUSTWD |

The 'reply status' sub-field is coded as follows:

| | | | | | | | |
|---|---|---|---|---|---|---|---|
| b7 | b6 | b5 | b4 | b3 | b2 | b1 | b0 |
| CONLOCK | NOSUB | 0 | 0 | 0 | 0 | 0 | 0 |
| CONLOCK: the card is locked for consulting confidential information | | | | | | | |
| NOSUB: the selected PPID does not contain any subscriptions by class | | | | | | | |

The response will contain zero or more DATES/CUSTWD sub-fields, coded as follows:

| b55 | b54 | b53 | b52 | b51 | b50 | b49 | b48 |
|---|---|---|---|---|---|---|---|
| BDY6 | BDY5 | BDY4 | BDY3 | BDY2 | BDY1 | BDY0 | BDM3 |
| | | | | | | | |

| b47 | b46 | b45 | b44 | b43 | b42 | b41 | b40 |
|---|---|---|---|---|---|---|---|
| BDM2 | BDM1 | BDM0 | BDD4 | BDD3 | BDD2 | BDD1 | BDD0 |
| | | | | | | | |

| b39 | b38 | b37 | b36 | b35 | b34 | b33 | b32 |
|---|---|---|---|---|---|---|---|
| FDY6 | FDY5 | FDY4 | FDY3 | FDY2 | FDY1 | FDY0 | FDM3 |
| | | | | | | | |

| b31 | b30 | b29 | b28 | b27 | b26 | b25 | b24 |
|---|---|---|---|---|---|---|---|
| FDM2 | FDM1 | FDM0 | FDD4 | FDD3 | FDD2 | FDD1 | FDD0 |
| | | | | | | | |

| b23 | b22 | b21 | b20 | b19 | b18 | b17 | b16 |
|---|---|---|---|---|---|---|---|
| CUSTWD23 | CUSTWD22 | CUSTWD21 | CUSTWD20 | CUSTWD19 | CUSTWD18 | CUSTWD17 | CUSTWD16 |
| · | | | | | | | |
| · | | | | | | | |
| · | | | | | | | |

| b7 | b6 | b5 | b4 | b3 | b2 | bl | b0 |
|---|---|---|---|---|---|---|---|
| CUSTWD7 | CUSTWD6 | CUSTWD5 | CUSTWD4 | CUSTWD3 | CUSTWD2 | CUSTWD1 | CUSTWD0 |
| BDY6-0: subscription period (coded as above) | | | | | | | |
| BDM3-0: " | | | | | | | |
| BDD4-0: " | | | | | | | |
| FDY6-0: " | | | | | | | |
| FDM3-0: " | | | | | | | |
| FDD4-0: " | | | | | | | |
| CUSTWD23-0: list of enabled subscription classes | | | | | | | |

If CONLOCK or NOSUB = 1, no DATES/CUSTWD sub-fields will be present in the CASS response.

### Report Pre-Booked Programmes

DECODER → CASS
Command Type: 21

| Data field: | | |
|---|---|---|
| sub-field | length | description |
| 1 | 3 | PPID |
| 2 | 6 | INUMB/FNUMB |

CASS → DECODER
Response Type: 21

| Data field: | | |
|---|---|---|
| sub-field | length | description |
| 1 | 1 | reply status |
| [2] | 6 | INUMB/FNUMB |
| · | | |
| · | | |
| · | | |
| [N] | 6 | INUMB/FNUMB |

The INUMB/FNUMB sub-field in the decoder-CASS command delimits the range of pre-booked programmes to be examined. This field is coded as follows:

| b47 | b46 | b45 | b44 | b43 | b42 | b41 | b40 |
|---|---|---|---|---|---|---|---|
| INUMB23 | INUMB22 | INUMB21 | INUMB20 | INUMB19 | INUMB18 | INUMB17 | INUMB16 |
| · | | | | | | | |
| · | | | | | | | |
| · | | | | | | | |

| b31 | b30 | b29 | b28 | b27 | b26 | b25 | b24 |
|---|---|---|---|---|---|---|---|
| INUMB7 | INUMB6 | INUMB5 | INUNB4 | INUMB3 | INUMB2 | INUMB1 | INUMB0 |
| | | | | | | | |

| b23 | b22 | b21 | b20 | b19 | b18 | b17 | b16 |
|---|---|---|---|---|---|---|---|
| FNUMB23 | FNUMB22 | FNUMB21 | FNUMB20 | FNUMB19 | FNUMB18 | FNUMB17 | FNUMB16 |
| · | | | | | | | |
| · | | | | | | | |
| · | | | | | | | |

| b7 | b6 | b5 | b4 | b3 | b2 | bl | b0 |
|---|---|---|---|---|---|---|---|
| FNUMB7 | FNUMB6 | FNUMB5 | FNUMB4 | FNUMB3 | FNUMB2 | FNUMB1 | FNUMB0 |
| INUMB must always be less than or equal to FNUMB. | | | | | | | |

The 'reply status' byte is coded as follows:

| | | | | | | | |
|---|---|---|---|---|---|---|---|
| b7 | b6 | b5 | b4 | b3 | b2 | b1 | b0 |
| CONLOCK | NOBOOK | COD | 0 | 0 | 0 | 0 | 0 |
| CONLOCK: the card is locked for consulting confidential information | | | | | | | |
| NOBOOK: the selected PPID does not contain any pre-booked programmes | | | | | | | |
| COD: type of coding | | | | | | | |

The response will contain zero or more INUMB/FNUMB sub-fields corresponding to pre-booked programmes, coded as above.

If CONLOCK or NOBOOK = 1, no INUMB/FNUMB sub-fields will be present in the CASS response.

### Report Pay-Per-View Per Programme Purchases

DECODER → CASS
Command Type: 22

| Data field: | | |
|---|---|---|
| sub-field | length | description |
| 1 | 3 | PPID |
| 2 | 6 | INUMB/FNUMB |

CASS → DECODER
Response Type: 22

| Data field: | | |
|---|---|---|
| sub-field | length | description |
| 1 | 1 | reply status |
| [2] | 5 | PNUMB/PPV/P |
| · | | |
| · | | |
| · | | |
| [N] | 5 | PNUMB/PPV/P |

The 'reply status' sub-field is coded as follows:

| | | | | | | | |
|---|---|---|---|---|---|---|---|
| b7 | b6 | b5 | b4 | b3 | b2 | b1 | b0 |
| PINLOCK | NOPUR | COD | 0 | 0 | 0 | 0 | 0 |
| PINLOCK: the card is locked for consulting confidential information NOPUR: no pay-per-view per programme purchases have been made for the selected PPID COD: type of coding | | | | | | | |

The response will contain zero or more PNUMB/PPV/P sub-fields, coded as follows:

| b39 | b38 | b37 | b36 | b35 | b34 | b33 | b32 |
|---|---|---|---|---|---|---|---|
| PNUMB23 | PNUMB22 | PNUMB21 | PNUMB20 | PNUMB19 | PNUMB18 | PNUMB17 | PNUMB16 |
| . | | | | | | | |
| . | | | | | | | |
| . | | | | | | | |

| b23 | b22 | b21 | b20 | b19 | b18 | b17 | b16 |
|---|---|---|---|---|---|---|---|
| PNUMB7 | PNUMB6 | PNUMB5 | PNUMB4 | PNUMB3 | PNUMB2 | PNUMB1 | PNUMB0 |
| | | | | | | | |

| b15 | b14 | b13 | b12 | b11 | b10 | b9 | b8 |
|---|---|---|---|---|---|---|---|
| PPV/P7 | PPV/P6 | PPV/P5 | PPV/P4 | PPV/P3 | PPV/P2 | PPV/P1 | PPV/P0 |
| | | | | | | | |

| b7 | b6 | b5 | b4 | b3 | b2 | b1 | b0 |
|---|---|---|---|---|---|---|---|
| FRPPV/P7 | FRPPV/P6 | FRPPV/P5 | FRPPV/P4 | FRPPV/P3 | FRPPV/P2 | FRPPV/P1 | FRPPV/P0 |
| PNUMB23-0: PNUMB | | | | | | | |
| PPV/P7-0: integer part of PPV/P | | | | | | | |
| FRPPV/P7-0: fractional part of PPV/P | | | | | | | |

If PINLOCK or NOPUR = 1, no PNUMB/PPV/P sub-fields will be present in the CASS response.

### Report Pay-Per-View Per Time Purchases

DECODER → CASS
Command Type: 23

| Data field: | | |
|---|---|---|
| sub-field | length | description |
| 1 | 3 | PPID |
| 2 | 6 | INUMB/FNUMB |

CASS → DECODER
Response Type: 23

| Data field: | | |
|---|---|---|
| sub-field | length | description |
| 1 | 1 | reply status |
| [2] | 7 | PNUMB/COST |
| · | | |
| · | | |
| · | | |
| [N] | 7 | PNUMB/COST |

The 'reply status' sub-field is coded as follows:

| b7 | b6 | b5 | b4 | b3 | b2 | b1 | b0 |
|---|---|---|---|---|---|---|---|
| PINLOCK | NOPUR | COD | 0 | 0 | 0 | 0 | 0 |
| PINLOCK: the card is locked for consulting confidential information | | | | | | | |
| NOPUR: no pay-per-view per time purchases have been made for the selected PPID | | | | | | | |
| COD: type of coding | | | | | | | |

The response will contain zero or more PNUMB/COST sub-fields, coded as follows:

| b55 | b54 | b53 | b52 | b51 | b50 | b49 | b48 |
|---|---|---|---|---|---|---|---|
| PNUMB23 | PNUMB22 | PNUMB21 | NUMB20 | PNUMB19 | PNUMB18 | PNUMB17 | PNUMB16 |
| · | | | | | | | |
| · | | | | | | | |
| · | | | | | | | |

| b39 | b38 | b37 | b36 | b35 | b34 | b33 | b32 |
|---|---|---|---|---|---|---|---|
| PNUMB7 | PNUMB6 | PNUMB5 | PNUMB4 | PNUMB3 | PNUMB2 | PNUMB1 | PNUMB0 |

| b31 | b30 | b29 | b28 | b27 | b26 | b25 | b24 |
|---|---|---|---|---|---|---|---|
| COST31 | COST30 | COST29 | COST28 | COST27 | COST26 | COST25 | COST24 |

| b7 | b6 | b5 | b4 | b3 | b2 | b1 | b0 |
|---|---|---|---|---|---|---|---|
| COST7 | COST6 | COSTS | COST4 | COST3 | COST2 | COST1 | COST0 |
| PNUMB23-0: PNUMB | | | | | | | |
| COST31-0: cost of PPV/T programmes purchased | | | | | | | |

If PINLOCK or NOPUR = 1, no PNUMB/COST sub-fields will be present in the CASS response.

### Report Current Access Mode

This command is used to determine the acess mode used to descramble the current programme.
DECODER → CASS
Command Type: 24
Data field: none
CASS → DECODER
Response Type: 24

| Data field: | | |
|---|---|---|
| sub-field | length | description |
| 1 | 1 | current access mode |

The 'current access mode' sub-field is coded as follows:

| | | | | | | | |
|---|---|---|---|---|---|---|---|
| b7 | b6 | b5 | b4 | b3 | b2 | b1 | b0 |
| 0 | 0 | 0 | PPV/T | PPV/P | PREPPV | SUBCL | SUBTH/L |
| PPV/T: pay-per-view per time PPV/P: pay-per-view per programme PREPPV: pre-booked pay-per-view per programme SUBCL: subscription per class SUBTH/L: subscription per theme/level | | | | | | | |

### Report Available Access Modes

DECODER → CASS
Command Type: 25

| Data field: | | |
|---|---|---|
| sub-field | length | description |
| 1 | 3 | PPID |

CASS → DECODER
Response Type: 25

| Data field: | | |
|---|---|---|
| sub-field | length | description |
| 1 | 1 | access modes |

The 'access modes' sub-field is coded as follows:

| | | | | | | | |
|---|---|---|---|---|---|---|---|
| b7 | b6 | b5 | b4 | b3 | b2 | b1 | b0 |
| 0 | 0 | 0 | PPV/T | PPV/P | PREPPV | SUBCL | SUBTH/L |
| PPV/T: pay-per-view per time authorised PPV/P: pay-per-view per programme authorised PREPPV: pre-booked pay-per-view per programme authorised SUBCL: subscription per class authorised SUBTH/L: subscription per theme/level authorised | | | | | | | |

### Pay-Per-View Per Programme Agreement

This command is used to indicate the user's agreement to buy the PPV/P programme identified by PNUMB.
DECODER → CASS
Command Type: 26

| Data field: | | |
|---|---|---|
| sub-field | length | description |
| 1 | 3 | PNUMB |

CASS → DECODER
Response Type: 26

| Data field: | | |
|---|---|---|
| sub-field | length | description |
| 1 | 1 | reply status |

The 'reply status' sub-field is coded as follows:

| | | | | | | | |
|---|---|---|---|---|---|---|---|
| b7 | b6 | b5 | b4 | b3 | b2 | b1 | b0 |
| NOREC | 0 | 0 | 0 | 0 | 0 | 0 | 0 |
| NOREC: user agreement not recorded by the CASS | | | | | | | |

### Pay-Per-View Per Time Agreement

This command is used to indicate the user's agreement to start paying for the PPV/T programme identified by PNUMB.
DECODER → CASS
Command Type: 27

| Data field: | | |
|---|---|---|
| sub-field | length | description |
| 1 | 3 | PNUMB |

CASS → DECODER
Response Type: 27

| Data field: | | |
|---|---|---|
| sub-field | length | description |
| 1 | 1 | reply status |

The 'reply status' sub-field is coded as follows:

| | | | | | | | |
|---|---|---|---|---|---|---|---|
| b7 | b6 | b5 | b4 | b3 | b2 | b1 | b0 |
| NOREC | 0 | 0 | 0 | 0 | 0 | 0 | 0 |
| NOREC: user agreement not recorded by the CASS | | | | | | | |

### Pay-Per-View Per Time Cancellation

This command is used to indicate the user's cancellation of a PPV/T agreement for the programme identified by PNUMB.
DECODER → CASS
Command Type: 28

| Data field: | | |
|---|---|---|
| sub-field | length | description |
| 1 | 3 | PNUMB |

CASS → DECODER
Response Type: 28

| Data field: | | |
|---|---|---|
| sub-field | length | description |
| 1 | 1 | reply status |

The 'reply status' sub-field is coded as follows:

| b7 | b6 | b5 | b4 | b3 | b2 | b1 | b0 |
|---|---|---|---|---|---|---|---|
| NOPRG | 0 | 0 | 0 | 0 | 0 | 0 | 0 |
| NOPRG: programme not found | | | | | | | |

### Enter Preselected Programme

This command is used to enter a programme in the PC2 card programme preselection area for future reception and descrambling.
DECODER → CASS
Command Type: 29

| Data field: | | |
|---|---|---|
| sub-field | length | description |
| 1 | 3 | PPID |
| 2 | 1 | programme type |
| [3] | 4 | CDATE/THEME/LEVEL |
| [3] | 3 | CDATE/LINK |
| [3] | 3 | PNUMB |
| [3] | 5 | PNUMB/PPVP |
| [3] | 7 | PNUMB/CEILING |

CASS → DECODER
Response Type: 29

| Data field: | | |
|---|---|---|
| sub-field | length | description |
| 1 | 1 | status code |

The PPID sub-field gives the preselected programme's PPID.

The 'programme type' sub-field is coded as follows:

| | | | | | | | |
|---|---|---|---|---|---|---|---|
| b7 | b6 | b5 | b4 | b3 | b2 | b1 | b0 |
| 0 | 0 | 0 | PPV/T | PPV/P | PREPPV | SUBCL | SUBTH/L |
| PPV/T: pay-per-view per time selection PPV/P: pay-per-view per programme selection PREPPV: pre-booked pay-per-view per programme selection SUBCL: subscription per class selection SUBTH/L: subscription per theme/level selection | | | | | | | |

The various sub-fields [3] described above are mutually exclusive, ie. only one type of programme can be entered at a time. They are coded as follows:

| CDATE/THEME/LEVEL: | | | | | | | |
|---|---|---|---|---|---|---|---|
| b31 | b30 | b29 | b28 | b27 | b26 | b25 | b24 |
| Y6 | Y5 | Y4 | Y3 | Y2 | Y1 | Y0 | M3 |
| | | | | | | | |

| b23 | b22 | b21 | b20 | b19 | b18 | b17 | b16 |
|---|---|---|---|---|---|---|---|
| M2 | M1 | M0 | D4 | D3 | D2 | D1 | D0 |
| | | | | | | | |

| b15 | b14 | b13 | b12 | b11 | b10 | b9 | b8 |
|---|---|---|---|---|---|---|---|
| TH7 | TH6 | TH5 | TH4 | TH3 | TH2 | TH1 | TH0 |
| | | | | | | | |

| b7 | b6 | b5 | b4 | b3 | b2 | b1 | b0 |
|---|---|---|---|---|---|---|---|
| LE7 | LE6 | LE5 | LE4 | LE3 | LE2 | LE1 | LE0 |
| Y6-0: programme broadcast date (coded as BD/FD in section *Report Subscriptions by Theme/level)* M3-0: " D4-0: " TH7-0: programme theme LE7-0: programme level | | | | | | | |

| CDATE/LINK: | | | | | | | |
|---|---|---|---|---|---|---|---|
| b23 | b22 | b21 | b20 | b19 | b18 | b17 | b16 |
| Y6 | Y5 | Y4 | Y3 | Y2 | Y1 | Y0 | M3 |
| | | | | | | | |

| b15 | b14 | b13 | b12 | b11 | b10 | b9 | b8 |
|---|---|---|---|---|---|---|---|
| M2 | M1 | M0 | D4 | D3 | D2 | D1 | D0 |
| | | | | | | | |

| b7 | b6 | b5 | b4 | b3 | b2 | b1 | b0 |
|---|---|---|---|---|---|---|---|
| LINK7 | LINK6 | LINK5 | LINK4 | LINK3 | LINK2 | LINK1 | LINK0 |
| Y6-0: programme broadcast date as coded above M3-0: " D4-0: " LINK7-0: pointer to list of enabled subscription classes | | | | | | | |

| PNUMB: | | | | | | | |
|---|---|---|---|---|---|---|---|
| b23 | b22 | b21 | b20 | b19 | b18 | b17 | b16 |
| PNUMB23 | PNUMB22 | PNUMB21 | PNUMB20 | PNUMB19 | PNUMB18 | PNUMB17 | PNUMB16 |
| · | | | | | | | |
| · | | | | | | | |
| · | | | | | | | |

| b7 | b6 | b5 | b4 | b3 | b2 | b1 | b0 |
|---|---|---|---|---|---|---|---|
| PNUMB7 | PNUMB6 | PNUMB5 | PNUMB4 | PNUMB3 | PNUMB2 | PNUMB1 | PNUMB0 |
| PNUMB23-0: pre-booked PPV programme number | | | | | | | |

| PNUMB/PPVP: | | | | | | | |
|---|---|---|---|---|---|---|---|
| b39 | b38 | b37 | b36 | b35 | b34 | b33 | b32 |
| PNUMB23 | PNUMB22 | PNUMB21 | PNUMB20 | PNUMB19 | PNUMB18 | PNUMB17 | PNUMB16 |
| . | | | | | | | |
| . | | | | | | | |
| . | | | | | | | |
| | | | | | | | |

| b23 | b22 | b21 | b20 | b19 | b18 | b17 | b16 |
|---|---|---|---|---|---|---|---|
| PNUMB7 | PNUMB6 | PNUMBS | PNUMB4 | PNUMB3 | PNUMB2 | PNUMB1 | PNUMB0 |
| | | | | | | | |

| b15 | b14 | b13 | b12 | b11 | b10 | b9 | b8 |
|---|---|---|---|---|---|---|---|
| PPV/P7 | PPV/P6 | PPV/P5 | PPV/P4 | PPV/P3 | PPV/P2 | PPV/P1 | PPV/P0 |
| | | | | | | | |

| b7 | b6 | b5 | b4 | b3 | b2 | b1 | b0 |
|---|---|---|---|---|---|---|---|
| FRPPV/P7 | FRPPV/P6 | FRPPV/P5 | FRPPV/P4 | FRPPV/P3 | FRPPV/P2 | FRPPV/P1 | FRPPV/P0 |
| PNUMB23-0: pay-per-view per programme programme number PPV/P7-0: integer part of programme cost FRPPV/P7-0: fractional part of programme cost | | | | | | | |

| PNUMB/CEILING: | | | | | | | |
|---|---|---|---|---|---|---|---|
| b55 | b54 | b53 | b52 | b51 | b50 | b49 | b48 |
| PNUMB23 | PNUMB22 | PNUMB21 | PNUMB20 | PNUMB19 | PNUMB18 | PNUMB17 | PNUMB16 |
| · | | | | | | | |
| · | | | | | | | |
| · | | | | | | | |

| b39 | b38 | b37 | b36 | b35 | b34 | b33 | b32 |
|---|---|---|---|---|---|---|---|
| PNUMB7 | PNUMB6 | PNUMBS | PNUMB4 | PNUMB3 | PNUMB2 | PNUMB1 | PNUMB0 |
| | | | | | | | |

| b31 | b30 | b29 | b28 | b27 | b26 | b25 | b24 |
|---|---|---|---|---|---|---|---|
| CEIL31 | CEIL30 | CEIL29 | CEIL28 | CEIL27 | CEIL26 | CEIL25 | CEIL24 |
| | | | | | | | |

| b7 | b6 | b5 | b4 | b3 | b2 | b1 | b0 |
|---|---|---|---|---|---|---|---|
| CEIL7 | CEIL6 | CEIL5 | CEIL4 | CEIL3 | CEIL2 | CEIL1 | CEIL0 |
| PNUMB23-0: pay-per-view per time programme number CEIL31-0: pay-per-view per time ceiling | | | | | | | |

The CASS response status code is coded as follows:

| | | | | | | | |
|---|---|---|---|---|---|---|---|
| b7 | b6 | b5 | b4 | b3 | b2 | b1 | b0 |
| BADMODE | NOENT | MEMFULL | PSLOCK | 0 | 0 | 0 | 0 |
| BADMODE: the access modes authorised for this PPID are incompatible with the access mode submitted to the card NOENT: No entitlement exists meeting the programme reference; the reference is still stored by the card, however MEMFULL: preselection memory full PSLOCK: PIN lock active for programme preselection. | | | | | | | |

### Cancel Preselected Programme

DECODER → CASS

Command Type: 30

| Data field: | | |
|---|---|---|
| sub-field | length | description |
| 1 | 3 | PPID |
| 2 | 1 | programme type |
| [3] | 4 | CDATE/THEME/LEVEL |
| [3] | 3 | CDATE/LINK |
| [3] | 3 | PNUMB |
| [3] | 5 | PNUMB/PPVP |
| [3] | 7 | PNUMB/CEILING |

CASS → DECODER
Response Type: 30

| Data field: | | |
|---|---|---|
| sub-field | length | description |
| 1 | 1 | status code |

The 'programme type' sub-field is coded as above.

The various sub-fields [3] described above are mutually exclusive, ie. only one type of programme can be cancelled at a time. They are coded as above.

The CASS response status code is coded as follows:

| b7 | b6 | b5 | b4 | b3 | b2 | b1 | b0 |
|---|---|---|---|---|---|---|---|
| NOREF | PSLOCK | 0 | 0 | 0 | 0 | 0 | 0 |
| NOREF: No programme preselection reference exists matching the reference in the command. | | | | | | | |
| PSLOCK: PIN lock active for programme preselection. | | | | | | | |

### Report Preselected Programmes

DECODER → CASS
Command Type: 31

| Data field: none | | |
|---|---|---|
| sub-field | length | description |

CASS → DECODER
Response Type: 31

| Data field: | | |
|---|---|---|
| sub-field | length | description |
| 1 | 1 | status code |
| 2 | 1 | no. of sub. by theme/level preselections |
| 3 | 1 | no. of sub. by class preselections |
| 4 | 1 | no. of pre-booked PPV preselections |
| 5 | 1 | no. of PPV per programme preselections |
| 6 | 1 | no. of PPV per time preselections |
| [7] | Ax7 | PPID/CDATE/THEME/LEVEL |
| [8/7] | Bx6 | PPID/CDATE/LINK |
| [9/8/7] | Cx6 | PPID/PNUMB |
| [10/9/8/7] | Dx8 | PPID/PNUMB/PPVP |
| [11/10/9/8/7] | Ex10 | PPID/PNUMB/CEILING |

The CASS response status code is coded as follows:

| | | | | | | | |
|---|---|---|---|---|---|---|---|
| b7 | b6 | b5 | b4 | b3 | b2 | b1 | b0 |
| NOREF | 0 | 0 | 0 | 0 | 0 | 0 | 0 |
| NOREF: No programme preselection references exist. | | | | | | | |

The 'no. of preselections' sub-fields 2-6 are simple unsigned 8-bit integers indicating the number of corresponding preselection sub-fields that follow. Sub-fields 7-11 are coded in a similar way as in section *Enter Preselected Programme:* each sub-field consists of zero or more concatenated preselection fields, each prefixed by the PPID of the associated programme provider.

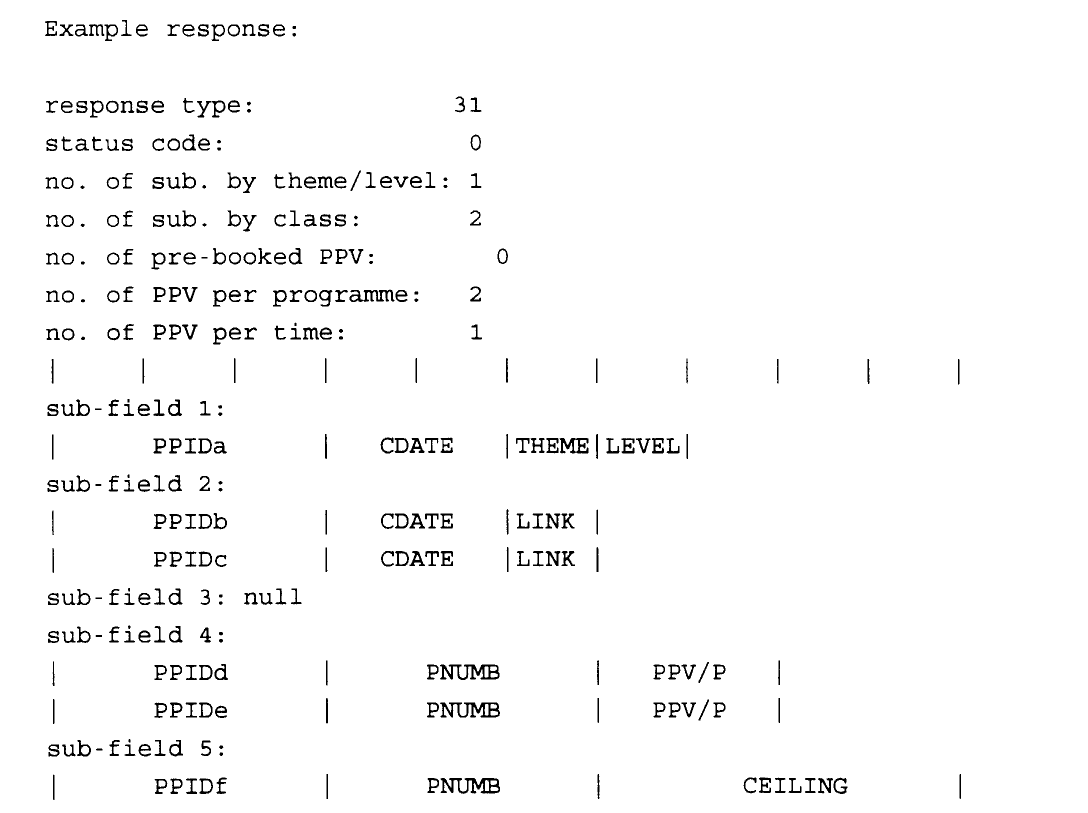

### ERROR PROCESSING

In the case of a CASS error during command processing, the CASS will send a 'CASS Error' response in place of the normal response to the command.

The CASS Error response is as follows:
CASS → DECODER
Response Type: 63

| Data field: | | |
|---|---|---|
| sub-field | length | description |
| 1 | 3 | PPID |
| 2 | 5 | CASS Status |

The PPID sub-field gives the last PPID selected before the error occurred.

The CASS Status sub-field is coded as follows:

| | | | | | | | |
|---|---|---|---|---|---|---|---|
| b39 | b38 | b37 | b36 | b35 | b34 | b33 | b32 |
| CABS | CERR | 0 | HF | NONLIS | MVAUTH | DENTAM | HASHNC |
| | | | | | | | |
| b31 | b30 | b29 | b28 | b27 | b26 | b25 | b24 |
| ZGINT | PNI | TRAITE | MAC | EI | IE/IL | AA | SF |
| | | | | | | | |
| b23 | b22 | b21 | b20 | b19 | b18 | b17 | b16 |
| MVSQ/L | ER | CVMEM | PBABS | ADI | DPPV/P | DPPV/T | CVMOR |
| | | | | | | | |
| b15 | b14 | b13 | b12 | b11 | b10 | b9 | b8 |
| CVAI | PBDATE | PBDEBO | PBTOTA | CVCONS | PBFAC | PBGRAT | PBMODE |
| | | | | | | | |
| b7 | b6 | b5 | b4 | b3 | b2 | b1 | b0 |
| PBTAIL | PBINV | PBVER | CARDREPLACED | 0 | 0 | 0 | 0 |
| CABS: Card Absent No PC2 card is in the CASS. This code can be used by the decoder UIM to generate appropriate warning messages. CERR: Card Error System/communications error in the PC2 card. This code can be used by the decoder UIM to generate appropriate warning messages. UNKNOWN: Unknown Card Unrecognised card type. This code can be used by the decoder UIM to generate appropriate warning messages. HF: Hash False An ECM/EMM packet transmission error has occurred. On receiving this code, the decoder should re-acquire the erroneous ECM or EMM message packets and retransmit them to the CASS. CARDREPLACED: The smart card has been replaced. bits b0 - b35: See 'Access Control System for the MAC/Packet Family: EUROCRYPT', July 1991, for meaning of these bits. These bits could for example be displayed in conjunction with the PPID as a code for the user to quote to an after-sales service centre. | | | | | | | |

The numbers given, e.g. voltages and time periods, can be adapted respectively to other applications.

## Claims

1. Method for the exchange of data between a master unit (Decoder) and one or more slave units (CASS) via a serial data bus, the serial data bus comprising :
- a first data connection (11, 21) which transmits commands and/or data from said master unit to said slave unit/s;
- a second data connection (13, 23) which transmits command responses and/or data from said slave unit/s to said master unit;
- a third data connection (12, 22) which identifies commands and/or data outputted by said master unit;
- a fourth data connection (14, 24) which indicates the state 'busy' and/or 'ready' of said slave unit/s, wherein all of said data connections are unidirectional and use a common ground level,
**characterized in that,**
the master unit (Decoder) sets the third data connection (12, 22) to a specific first state and sends the command header of a command via the first connection to the slave unit/s, that the master unit (Decoder) sets the third data connection (12, 22) to a specific second state and sends the rest of the command, i.e. data associated with the command, via the first connection to the slave unit/s,
that the addressed slave unit sets the fourth data connection (14, 24) to a specific first state when it has received the complete command, that the slave unit processes the command and sends a command response to the master unit via the second data connection (13, 23) and that the addressed slave unit sets the fourth data connection (14, 24) to a specific second state, when it is ready to receive a new command from the master unit (Decoder).

2. Method according to claim 1, wherein the master unit (Decoder) is allowed to transmit a command only if the fourth data connection is in the specific second state.

3. Method according to claim 1 or 2 wherein the master unit sets the third data connection to the specific first state when it wants to slow down the data flow from the addressed slave unit (CASS) during transmittance of the command response.

4. Method according to one of claims 1 - 3, wherein each command from the master unit is identified by a command type parameter.

5. Method according to one of claims 1 - 4, wherein each command response from a slave unit (CASS) is identified by a response type parameter.

6. Method according to one of claims 1 - 5, wherein the command and command response carries a data length information.

7. Method according to claim 6, wherein the data length information is a data word with nine bits.

8. Method according to claims 6 or 7, wherein the command header consists of a field for the command type, a field for a continuation bit and a field for at least the last bit of the data length information for the command.

9. Method according to one of claims 6 - 8, wherein the command response header consists at least of a command response header and optional data associated with the command response and wherein the command response header consits of a field for the command repsonse type, a field for a continuation bit and a field for at least the last bit of a data length information for the command response.

10. Method according to one of claims, 8 or 9 wherein the maximum length of a command/command response data field is 256 Bytes and wherein the absence of a data field is indicated by setting the field for at least the last bit of the data length information to a specific state.

11. Method according to one of claims 1 - 10, wherein the master unit repeats at least the previous command header when it receives a command response including a command response header having the field for the continuation Bit set to an active state.

12. Method according to one of claim 1 - 11, wherein a time out detection is started in the master unit when the master unit has sent the last Byte of its command and re-initialized after each byte during the response.

13. Method according to one of claims 1 - 12, wherein a time out detection is started in the slave unit between each transmitted word during the reception of a command from the master unit.

14. Method according to one of claims 1 - 13, wherein it is used in a TV receiver for the exchange of data between a descrambler and a control access subsystem and wherein one or more of the following commands and corresponding command responses are exchanged:
- initialise service
- report unit parameters
- input ECM
- input EMM - M
- input EMM - G
- input EMM - S
- input EMM - C
- report PC2 lock status
- modify PC2 lock status
- report reference maturity level
- modify reference maturity level
- modify PIN code
- report current programme parameters
- report card entities
- report remaining credit
- report allowed overdraft
- report pay-per-view per time ceiliing
- modify pay-per-view per time ceiling
- report subscriptions by theme/level
- report subscriptions by class
- report pre-booked programmes
- report pay-per-view per programme purchases
- report pay-per-view per time purchases
- report current access mode
- report available access modes
- indicate pay-per-view per programme agreement
- indicate pay-per-view per time agreement
- indicate pay-per-view per time cancellation
- enter preselected programme
- cancel preselected programme
- report preselected programmes
- error processing.

## Patentansprüche

1. Verfahren zum Austausch von Daten zwischen einer Haupteinheit (Decoder) und einer oder mehreren Tochtereinheiten (CASS) über einen seriellen Datenbus, wobei der serielle Datenbus umfaßt:
- eine erste Datenverbindung, die Befehle und/oder Daten von der Haupteinheit zu der Tochtereinheit bzw. den Tochtereinheiten überträgt;
- eine zweite Datenverbindung (13, 23), die Befehlsantworten und/oder Daten von der Tochtereinheit bzw. von den Tochtereinheiten zu der Haupteinheit überträgt;
- eine dritte Datenverbindung (12, 22), die Befehle und/oder Daten, die von der Haupteinheit ausgegeben werden, identifiziert,
- eine vierte Datenverbindung (14, 24), die den Zustand "belegt" und/oder "bereit" der Tochtereinheit bzw. den Tochtereinheiten anzeigt, wobei alle Datenverbindungen in einer Richtung wirken und einen gemeinsamen Massepegel verwenden,
**dadurch gekennzeichnet**, daß
die Haupteinheit (Decoder) die dritte Datenverbindung (12, 22) in einen bestimmten ersten Zustand setzt und den Befehlskopf eines Befehls über die erste Verbindung zu der Tochtereinheit bzw. den Tochtereinheiten sendet, daß die Haupteinheit (Decoder) die dritte Datenverbindung (12, 22) in einen bestimmten zweiten Zustand setzt und den Rest des Befehls, d.h. dem Befehl zugeordnete Daten, über die erste verbindung an die Tochtereinheit bzw. an die Tochtereinheiten sendet, daß die adressierte Tochtereinheit die vierte Datenverbindung (14, 24) in einen bestimmten ersten Zustand setzt, wenn sie den vollständigen Befehl empfangen hat, daß die Tochtereinheit den Befehl verarbeitet und eine Befehlsantwort an die Haupteinheit über die zweite Datenverbindung (13, 23) sendet, und daß die adressierte Tochtereinheit die vierte Datenverbindung (14, 24) in einen bestimmten zweiten Zustand setzt, wenn sie bereit ist, einen neuen Befehl von der Haupteinheit (Decoder) zu empfangen.

2. Verfahren nach Anspruch 1, bei dem *die* Haupteinheit (Decoder) einen Befehl nur übertragen darf, wenn sich die vierte Datenverbindung in dem bestimmten zweiten Zustand befindet.

3. Verfahren nach Anspruch 1 oder 2, bei dem die Haupteinheit die dritte Datenverbindung in den bestimmten ersten Zustand setzt, wenn sie eine Verlangsamung des Datenflusses von der adressierten Tochtereinheit (CASS) während der übertragung der Befehlsantwort wünscht.

4. Verfahren nach einem der Ansprüche 1 bis 3, bei dem jeder Befehl von der Haupteinheit durch einen Befehls-Typ-Parameter identifiziert wird.

5. Verfahren nach einem der Ansprüche 1 bis 4, bei dem jede Befehlsantwort von einer Tochtereinheit (CASS) von einem Antwort-Typ-Parameter identifiziert wird.

6. Verfahren nach einem der Ansprüche 1 bis 5, bei dem der Befehl und die Befehlsantwort eine Datenlängen-Information enthalten.

7. Verfahren nach Anspruch 6, bei dem die Datenlängen-Information ein Datenwort mit neun Bits ist.

8. verfahren nach Anspruch 6 oder 7, bei dem der Befehlskopf aus einem Feld für den Befehls-Typ, einem Feld für ein Fortsetzungs-Bit und einem Feld für wenigstens das letzte Bit der Datenlängen-Information für den Befehl besteht.

9. Verfahren nach einem der Ansprüche 6 bis 8, bei dem der Befehlsantwort-Kopf aus wenigstens einem Befehlsantwort-Kopf und wahlweisen der Befehlsantwort zugeordneten Daten besteht, und bei dem der Befehlsantwort-Kopf aus einem Feld für den Befehlsantwort-Typ, einem Feld für ein Fortsetzungs-Bit und einem Feld für wenigstens das letzte Bit einer Datenlängen-Infomation für die Befehlsantwort besteht.

10. Verfahren nach einem der Ansprüche 8 oder 9, bei dem die maximale Lange eines Befehls-/Befehlsantwort-Datenfeldes 256 Bytes beträgt, und bei dem das Fehlen eines Datenfeldes durch Setzen des Feldes für wenigstens das letzte Bit der Datenlängen-Information in einen bestimmten Zustand angezeigt wird.

11. Verfahren nach einem der Ansprüche 1 bis 10, bei dem die Haupteinheit wenigstens den vorhergehenden Befehls-Kopf wiederholt, wenn sie eine Befehlsantwort empfängt, die einen Befehlsantwort-Kopf enthält, bei dem das Feld für das Fortsetzungs-Bit in einen aktiven Zustand versetzt ist.

12. Verfahren nach einem der Ansprüche 1 bis 11, bei dem eine Zeitsperre-Feststellung in der Haupteinheit begonnen wird, wenn die Haupteinheit das letzte Byte ihres Befehls gesendet hat und eine Re-Initialisierung nach jedem Byte während der Antwort erfolgt.

13. Verfahren nach einem der Ansprüche 1 bis 12, bei dem eine Zeitsperre-Feststellung in der Tochtereinheit zwischen jedem Übertragenen Wort während des Empfangs eines Befehls von der Haupteinheit begonnen wird.

14. Verfahren nach einem der Ansprüche 1 bis 13, das in einem Fernsehempfänger für den Austausch von Daten zwischen einem Entschlüsseler und einem Zugangs-Steuer-Untersystem verwendet wird, und bei dem ein oder mehrere der folgenden Befehle und entsprechenden Befehlsantworten ausgetauscht werden:
- initialisiere Service
- berichte Einheits-Parameter
- gib ECM ein
- gib EMM-M ein
- gib EMM-G ein
- gib EMM-S ein
- gib EMM-C ein
- berichte PC2 Sperrzustand
- modifiziere PC2 Sperrzustand
- berichte Bezugs-Empfangsbereitschaftsgrad
- modifiziere Bezugs-Empfangsbereitschaftsgrad
- modifiziere PIN-Code
- berichte gegenwärtige Programm-Parameter
- berichte Karten-Funktionsumfang
- berichte verbleibenden Kredit
- berichte erlaubte Überziehung
- berichte Grenze des Pay-per-View-pro-Zeit-Kontos
- modifiziere Grenze des Pay-per-View-pro-Zeit-Kontos
- berichte Abonnements nach Thema/Level
- berichte Abonnements nach Klasse
- berichte vorgebuchte Programme
- berichte Pay-per-View-Programm-Käufe
- berichte Pay-per-View-pro-Zeit-Käufe
- berichte gegenwärtige Zugangs-Betriebsart
- berichte verfügbare Zugangs-Betriebsarten
- zeige Pay-per-View-pro-Programmzustimmung an
- zeige Pay-per-View-pro-Zeitzustimmung an
- zeige Pay-per-View-pro-Zeit-Löschung an
- gib vorgewählte Programme ein
- lösche vorgewählte Programme
- berichte vorgewählte Programme
- Fehlerverarbeitung.

## Revendications

1. Procédé pour l'échange de données entre une unité maître (décodeur) et une ou plusieurs unités esclave (CASS) à travers un bus de données-série, le bus de données-série comprenant :
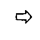 une première connexion de données (11, 21) qui transmet des commandes etlou des données à partir de ladite unité maître vers la ou lesdites unités esclave ;
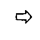 une seconde connexion de données (13, 23) qui transmet des réponses de commande etlou des données à partir de la ou desdites unités esclave vers ladite unité maître ;
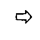 une troisième connexion de données (12, 22) qui identifie les commandes etlou les données provenant de ladite unité maître ;
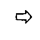 une quatrième connexion de données (14, 24) qui indique l'état "occupé" etlou "prêt" de la ou desdites unités esclave, dans laquelle toutes les connexions de données sont unidirectionnelles et utilisent une masse commune,
caractérisé en ce que,
l'unité maître (décodeur) positionne la troisième connexion de données (12, 22) à un premier état spécifique et envoie l'en-tête de commande d'une commande à travers la première connexion vers la ou les unités esclave, en ce que l'unité maître (décodeur) positionne la troisième connexion de données (12, 22) dans un second état spécifique et envoie le reste de la commande, à savoir les données associées avec la commande, à travers la première connexion à ou aux unités esclave, en ce que l'unité esclave adressée positionne la quatrième connexion de données (14, 24) à un premier état spécifique lorsqu'il a reçu la commande complète, en ce que l'unité esclave traite la commande et envoie une réponse de commande à l'unité maître à travers la seconde connexion de données (13, 23) et en ce que l'unité esclave adressée positionne la quatrième connexion de données (14, 24) à un second état spécifique, lorsqu'il est prêt à recevoir une nouvelle commande provenant de l'unité maître (décodeur).

2. Procédé selon la revendication 1, dans lequel l'unité maître (décodeur) est autorisée à transmettre une commande seulement si la quatrième connexion de données est dans le second état spécifique.

3. Procédé selon la revendication 1 ou 2, dans lequel l'unité maître positionne la troisième connexion de données dans le premier état spécifique lorsqu'il souhaite ralentir le flux de données provenant de l'unité esclave adressée (CASS) durant la transmission de la réponse de commande.

4. Procédé selon l'une des revendications 1 - 3, dans lequel chaque commande provenant de l'unité maître est identifiée par un paramètre type de commande.

5. Procédé selon l'une des revendications 1 - 4, dans lequel chaque réponse de commande provenant d'une unité esclave (CASS) est identifiée par un paramètre type de réponse.

6. Procédé selon l'une des revendications 1 - 5, dans lequel la commande et la réponse de commande comportent une information de longueur de données.

7. Procédé selon la revendication 6, dans lequel l'information longueur de données est un mot de données avec 9 bits.

8. Procédé selon les revendications 6 ou 7, dans lequel l'en-tête de commande consiste en un champ pour le type de commande, un champ pour un bit de continuation et un champ pour au moins le dernier bit de l'information de longueur de données pour la commande.

9. Procédé selon l'une des revendications 6 - 8, dans lequel l'en-tête de réponse de commande consiste en au moins une en-tête de réponse de commande et des données optionnelles associées avec la réponse de commande et dans lequel l'en-tête de réponse de commande consiste en un champ pour le type *de* réponse de commande, un champ pour un bit de continuation et un champ pour au moins le dernier bit d'une information de longueur de données pour la réponse de commande.

10. Procédé selon l'une des revendications 8 ou 9, dans lequel la longueur maximale du champ de données de commande ou de données réponse de commande est de 256 octets et dans lequel l'absence d'un champ de données est indiqué en plaçant le champ pour au moins le dernier bit d'une information de longueur de données dans un état spécifique.

11. Procédé selon l'une des revendications 1 - 10, dans lequel l'unité maître répète au moins l'en-tête de commande préalable lorsqu'elle reçoit une réponse de commande comportant une en-tête de réponse de commande dont le champ pour le bit de continuation est placé dans un état actif.

12. Procédé selon l'une des revendications 1 - 11, dans lequel la détection d'un temps mort commence dans l'unité maître lorsque l'unité maître a envoyé le dernier octet de sa commande et est réinitialisée après chaque octet durant la réponse.

13. Procédé selon l'une des revendications 1 - 12, dans lequel la détection de temps mort commence dans l'unité esclave entre chaque mot transmis durant la réception d'une commande provenant de l'unité maître.

14. Procédé selon l'une des revendications 1 - 13, caractérisé en ce qu'il est utilisé dans un récepteur TV pour l'échange de données entre un désem-brouilleur et un sous-système de contrôle d'accès et dans lequel une ou plusieurs des commandes suivantes et des réponses de commande correspon-dantes sont échangées :
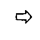 initialisation du service,
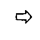 rapport paramètres d'une unité,
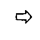 entrée d'ECM,
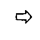 entrée d'EMM - M,
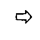 entrée d'EMM - G,
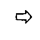 entrée d'EMM - S,
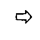 entrée d'EMM - C,
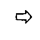 rapport statut du verrouillage du PC2,
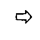 modification du statut du verrouillage du PC2,
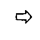 rapport niveau d'exploitabilité de référence,
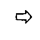 modification du niveau d'exploitabilité de référence,
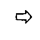 modification du code PIN,
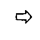 rapport paramètres du programme courant,
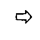 rapport entités carte,
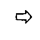 rapport crédit restant,
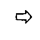 rapport dépassement autorisé,
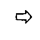 rapport plafond de paiement à la séance par heure,
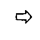 modification du plafond de paiement à la séance par heure,
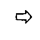 rapport souscriptions par thème/niveau,
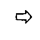 rapport souscriptions par classe,
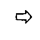 rapport programmes pré-réservés,
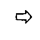 rapport achats de paiement à la séance par programme,
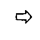 rapport achats de paiement à la séance par heure,
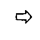 rapport mode d'accès courant,
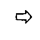 rapport modes d'accès disponibles,
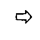 indication d'un accord de paiement à la séance par programme,
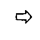 indication d'un accord de paiement à la séance par heure,
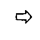 indication de la suppression du paiement à la séance par heure,
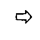 entrée d'un programme présélectionné,
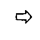 suppression d'un programme présélectionné,
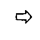 rapport de programmes présélectionnés,
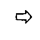 traitement d'erreur.
